# EUROPEAN PATENT SPECIFICATION

(11) **EP 4 414 120 B1**
(45) Date of publication and mention of the grant of the patent: **18.06.2025**
(21) Application number: 22878412.0
(22) Date of filing: 29.09.2022
(51) Int. Cl.: B23K 26/70, B65G 1/04, B65G 57/03, B65G 49/06, B23K 26/08, B23K 26/38, B23K 37/047, B23K 37/04, B23K 101/18

(54) **WORKPIECE SEPARATION DEVICE, WORKPIECE SEPARATION METHOD, AND PALLET SHELVING DEVICE**
WERKSTÜCKTRENNVORRICHTUNG, WERKSTÜCKTRENNVERFAHREN UND PALETTENREGALVORRICHTUNG
DISPOSITIF DE SÉPARATION DE PIÈCE À TRAVAILLER, PROCÉDÉ DE SÉPARATION DE PIÈCE À TRAVAILLER ET DISPOSITIF DE RAYONNAGE À PALETTES

(30) Priority: 04.10.2021 JP 2021163453
(43) Date of publication of application: 14.08.2024
(73) Proprietor: Amada Co., Ltd., Isehara-shi, Kanagawa 259-1196 (JP)
(72) Inventor: HIRONO, Jun, Isehara-shi, Kanagawa 259-1196 (JP); SHIMOJI, Shinobu, Isehara-shi, Kanagawa 259-1196 (JP)
(74) Representative: Grünecker Patent- und Rechtsanwälte PartG mbB
(86) International application number: PCT/JP2022/036376
(87) International publication number: WO 2023/058542

(56) References cited:
- WO-A1-2016/088494
- WO-A1-2016/088494
- JP-A- 2000 264 407
- JP-A- 2015 012 404
- JP-A- 2015 104 793
- JP-A- 2015 104 793
- JP-A- 2015 223 608
- US-B2- 10 981 290

## Description

### [TECHNICAL FIELD]

The present disclosure relates to a workpiece separation device, a workpiece separation method, and a pallet shelf device.

### [BACKGROUND ART]

Patent Literature 1 discloses a pallet in which a plurality of workpiece supports (also called skids) which support a workpiece are arranged in parallel, and a workpiece lifting device which lifts the thermally cut workpiece placed on the pallet from the pallet. The workpiece lifting device disclosed in Patent Literature 1 includes a raising/lowering unit which is arranged between the adjacent workpiece supports, and is raised and lowered synchronously. Thus, even if the workpiece is welded to the workpiece supports, the welded portion is pulled apart when the workpiece is lifted by the raising/lowering unit, thereby removing the workpiece therefrom.

US10981290B1 discloses a workpiece transportation system which includes a machining palette that is able to move while holding a cut workpiece including a product and the remainder; a supporter that receives the workpiece from the machining palette and supports the workpiece; a suction attacher disposed on the supporter and attaches by suction to at least the product in the workpiece supported by the supporter; and a gripper that separates the remainder from the product attached to by suction by the suction attacher.

The workpiece lifting device is also called a workpiece separation device because it separates a workpiece from a pallet. Generally, a pallet is carried in and out of a laser processing machine by a pallet shelf device. The workpiece separation device is provided in the pallet shelf device.

### [Citation List]

### [Patent Literature]

[Patent Literature 1] Japanese Patent No. 5967216

### [SUMMARY OF INVENTION]

With the recent increase in laser beam power, a possibility has increased in which the workpiece is welded to the workpiece support, and the welding strength when welded to the workpiece support has also increased. As the welding strength increases, there is a concern that it will become difficult to pull apart the welded portion in the lifting operation which relies solely on the raising movement of the raising/lowering unit, as disclosed in Patent Literature 1. Accordingly, a workpiece separation device, a workpiece separation method, and a pallet shelf device have been desired with which it is possible to separate the workpiece welded to the workpiece supports from the pallet having the workpiece supports more reliably.

An aspect of the present disclosure is a workpiece separation device comprising: a raising/lowering unit from which a plurality of string-like members are hung down in such a way as to be raised and lowered synchronously; a separation unit which is suspended by the plurality of string-like members; a pallet which has a workpiece support on which a rectangular workpiece is placed and is arranged below the separation unit; a first clamp unit which is provided in the separation unit, and holds a first edge portion of the workpiece placed on the workpiece support; a second clamp unit which holds a second edge portion of the workpiece opposite to the first edge portion; and a push-up unit which receives a reaction force from the pallet by pushing a pusher onto the pallet, thereby pushing up the second clamp unit.

According to an aspect of the workpiece separation device, when the rectangular workpiece is separated from the workpiece support, it is separated by lifting one edge portion, and thus the workpiece can be separated from the workpiece support more reliably even if there is a welded portion in which the workpiece is welded to the workpiece support.

An aspect of the present disclosure is a workpiece separation method in which a separation unit is used, and the separation unit includes: a first clamp unit which is suspended from a raising/lowering unit to be raised and lowered, and holds a first edge portion of a rectangular workpiece; a second clamp unit which holds a second edge portion of the workpiece opposite to the first edge portion; and a first push-up unit and a second push-up unit which are respectively arranged in a same rigid body as the first clamp unit and the second clamp unit, and extend respective pushers downward, and in a state in which the rectangular workpiece is placed on a workpiece support of a pallet having the workpiece support, and the pallet is positioned below the separation unit, the method comprising: a step of holding a first edge portion and a second edge portion of the workpiece placed on the workpiece support by the first clamp unit and the second clamp unit, respectively; a step of lifting the second clamp unit and the second edge portion of the workpiece by a reaction force from the pallet which is received by extending the pusher of the second push-up unit downward and pushing the pusher onto the pallet; a step of lifting the first clamp unit and the first edge portion of the workpiece by a reaction force from the pallet which is received by extending the pusher of the first push-up unit downward and pushing the pusher onto the pallet after lifting the second edge portion; and a step of raising the separation unit, separating the workpiece from the workpiece support and raising the workpiece, after lifting the first edge portion.

According to an aspect of the workpiece separation method, when the rectangular workpiece is separated from the workpiece support, the separation is performed including a step of lifting one edge portion of the workpiece and a step of lifting the opposite edge portion thereafter, and thus the workpiece can be separated from the workpiece support more reliably even if there is a welded portion in which the workpiece is welded to the workpiece support.

An aspect of the present disclosure is a pallet shelf device comprising: a plurality of storage units which are arranged in parallel in an up-down direction, and capable of storing a pallet in each of the storage units; the above-described workpiece separation device which is arranged below the plurality of storage units; and an elevator shelf which moves the pallet between each of the storage units and a lower part of the separation unit in the workpiece separation device.

According to an aspect of the pallet shelf device, when the rectangular workpiece is separated from the workpiece support, it is separated by lifting one edge portion, and thus the workpiece can be separated from the workpiece support more reliably even if there is a welded portion in which the workpiece is welded to the workpiece support. In addition, the pallet can be replaced in a short time, and thus it is possible to separate the workpiece with high efficiency.

An aspect of the present invention makes it possible to separate the workpiece welded to the workpiece supports more reliably.

### [BRIEF DESCRIPTION OF DRAWINGS]

[FIG. 1] FIG. 1 is a diagram illustrating a configuration of a laser processing system ST including a laser processing machine 91 and a pallet shelf device 92.
[FIG. 2] FIG. 2 is a right side view illustrating the pallet shelf device 92.
[FIG. 3] FIG. 3 is a top view of a pallet 7 of the pallet shelf device 92.
[FIG. 4] FIG. 4 is a cross-sectional view at S4-S4 position of FIG. 3.
[FIG. 5A] FIG. 5A is a schematic diagram illustrating a schematic configuration and operation of a workpiece separation device 93 provided in the pallet shelf device 92, and is a diagram illustrating a state in which a basic frame body 51 is raised.
[FIG. 5B] FIG. 5B is a diagram illustrating a schematic configuration and operation of the workpiece separation device 93 provided in the pallet shelf device 92, and is a schematic diagram illustrating a state in which the basic frame body 51 is lowered.
[FIG. 6] FIG. 6 is a perspective view illustrating a raising/lowering unit 3 provided in the workpiece separation device 93.
[FIG. 7] FIG. 7 is a top view illustrating a separation unit 5 provided in the workpiece separation device 93.
[FIG. 8A] FIG. 8A is a cross-sectional view at S8-S8 position of FIG. 7, in which a reference side clamp unit 55 provided in the separation unit 5 is illustrated as a side view. FIG. 8A illustrates a state in which a pushing portion 552 is raised.
[FIG. 8B] FIG. 8B is a cross-sectional view at the S8-S8 position of FIG. 7, in which the reference side clamp unit 55 provided in the separation unit 5 is illustrated as a side view. FIG. 8B illustrates a state in which the pushing portion 552 is lowered.
[FIG. 9A] FIG. 9A is a cross-sectional view at S9-S9 position of FIG. 7, in which a reference side push-up unit 57 provided in the separation unit 5 is illustrated as a side view. FIG. 9A illustrates a state in which a pusher 574 is raised.
[FIG. 9B] FIG. 9B is a cross-sectional view at the S9-S9 position of FIG. 7, in which the reference side push-up unit 57 provided in the separation unit 5 is illustrated as a side view. FIG. 9B illustrates a state in which the pusher 574 is lowered.
[FIG. 10 ]FIG. 10 is a cross-sectional view at S10-S10 position of FIG. 7, in which a deflection detection sensor unit 63 provided in the separation unit 5 is illustrated as a side view.
[FIG. 11] FIG. 11 is a block diagram illustrating a configuration of the pallet shelf device 92.
[FIG. 12] FIG. 12 is a first diagram illustrating an operation of the workpiece separation device 93.
[FIG. 13] FIG. 13 is a second diagram illustrating the operation of the workpiece separation device 93.
[FIG. 14A] FIG. 14A is a third diagram illustrating an operation for holding a skeleton Ws by the reference side clamp unit 55, and is a diagram illustrating a first holding operation.
[FIG. 14B] FIG. 14B is the third diagram illustrating the operation for holding the skeleton Ws by the reference side clamp unit 55, and is a diagram illustrating a second holding operation.
[FIG. 14C] FIG. 14C is the third diagram illustrating the operation for holding the skeleton Ws by the reference side clamp unit 55, and is a diagram illustrating a third holding operation.
[FIG. 15A] FIG. 15A is a fourth diagram illustrating the operation of the workpiece separation device 93, and is a partially enlarged view of the separation unit 5.
[FIG. 15B] FIG. 15B is the fourth diagram illustrating the operation of the workpiece separation device 93, and is an overall view of the workpiece separation device 93.
[FIG. 16] FIG. 16 is a fifth diagram illustrating the operation of the workpiece separation device 93.
[FIG. 17] FIG. 17 is a sixth diagram illustrating the operation of the workpiece separation device 93.
[FIG. 18] FIG. 18 is a seventh diagram illustrating the operation of the workpiece separation device 93.
[FIG. 19] FIG. 19 illustrates an eighth diagram illustrating the operation of the workpiece separation device 93.
[FIG. 20] FIG. 20 is a ninth diagram illustrating the operation of the workpiece separation device 93.
[FIG. 21] FIG. 21 is a top view illustrating a separation unit 5V to which a vibration device V is attached.
[FIG. 22] FIG. 22 is a side view illustrating an operation of the vibration device V.
[FIG. 23] FIG. 23 is a block diagram illustrating a configuration of a pallet shelf device 92V having the separation unit 5V.
[FIG. 24] FIG. 24 is a flow diagram of a workpiece separation operation performed by the pallet shelf device 92 and the pallet shelf device 92V.

### [DESCRIPTION OF EMBODIMENT]

A workpiece separation device and a pallet shelf device according to a present embodiment will be described based on a workpiece separation device 93 and a pallet shelf device 92 provided with the workpiece separation device 93. First, an installation example of the pallet shelf device 92 will be described based on a laser processing system ST which combines the pallet shelf device 92 and a laser processing machine 91.

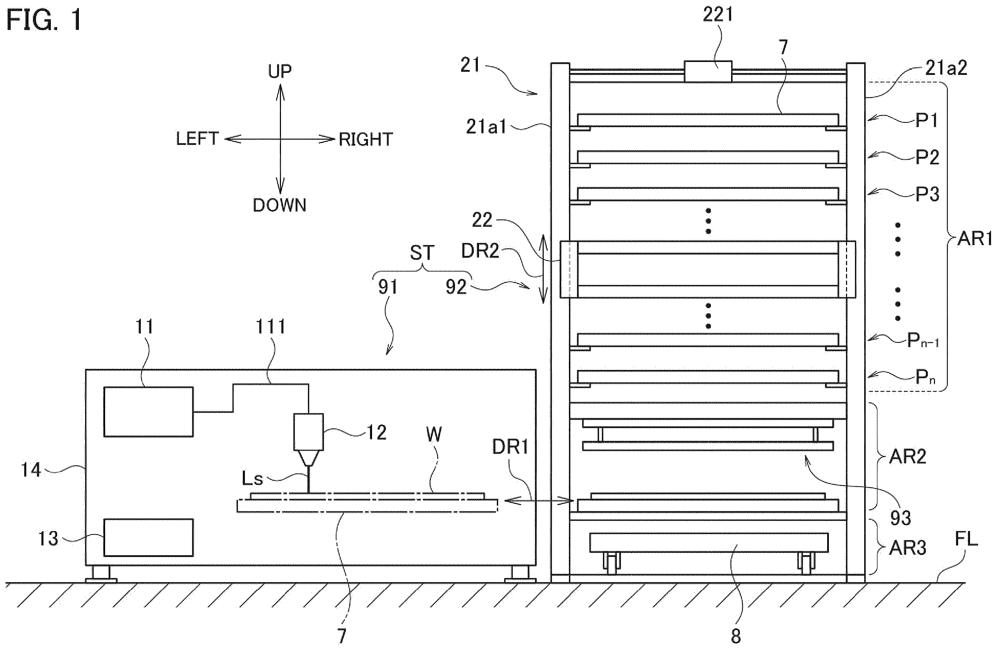

FIG. 1 is a diagram illustrating a configuration of the laser processing system ST including the laser processing machine 91 and the pallet shelf device 92. For the sake of convenience for explanation, the respective directions of up, down, left, and right are defined in the directions indicated by arrows in FIG. 1. The front is a position at the front side of the page space, and the rear is a position at the rear of the page space.

The laser processing system ST includes the laser processing machine 91 installed on a floor surface FL, and the pallet shelf device 92 positioned on the right side of the laser processing machine 91. The laser processing machine 91 has a housing 14, a laser oscillator 11, an optical fiber 111, a laser processing head 12, and a processing control unit 13. The laser oscillator 11 and the laser processing head 12 are housed in the housing 14. The installation position of the processing control unit 13 is not limited. The laser oscillator 11 is, for example, a fiber laser, and generates a laser beam. The laser beam generated by the laser oscillator 11 is supplied to the laser processing head 12 through the optical fiber 111, and is emitted as a laser beam Ls directed downward.

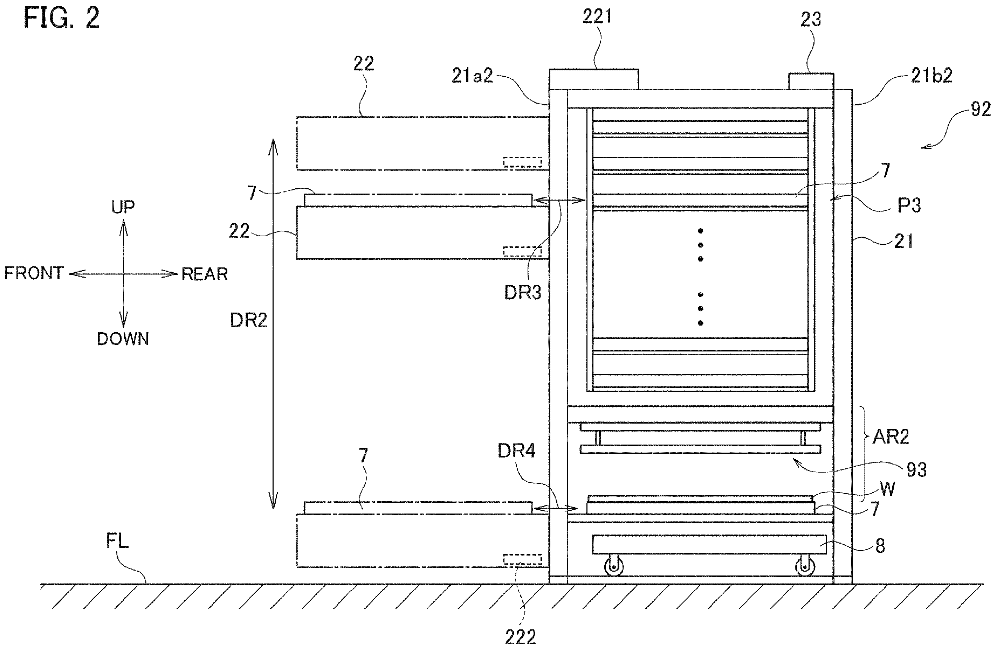

A pallet 7 is carried in from the outside below the laser processing head 12. The laser processing head 12 and the pallet 7 move horizontally in two dimensions in a relative manner. Thus, a sheet metal workpiece W placed on the upper surface of the pallet 7 is irradiated with a laser beam Ls in two dimensions, and laser processing such as cutting in a desired path is performed on the workpiece W. The processing control unit 13 controls the laser oscillator 11, the laser processing head 12, and the relative two-dimensional movement between the laser processing head 12 and the pallet 7 by means of a drive device (not illustrated) . The processing control unit 13 also performs control in cooperation with a shelf control unit 23 (see FIG. 2) which controls the operation of the pallet shelf device 92. The pallet 7 is carried in and out of the laser processing machine 91 by the pallet shelf device 92 (see arrow DR1).

The pallet shelf device 92 will be described with reference to FIGS. 1 and 2. FIG. 2 is a right side view illustrating the pallet shelf device 92.

The pallet shelf device 92 is a shelf having a frame body 21 which is assembled to form a square when seen in a top view. The frame body 21 includes a front left frame 21a1, a front right frame 21a2, a rear left frame 21b1, and a rear right frame 21b2 which are supporting columns arranged at four corners of the square and extending in the up-down direction. The frame body 21 is structured by connecting these supporting columns with a plurality of horizontally extending frames, thereby forming a sturdy shelf.

As illustrated in FIG. 1, the pallet shelf device 92 is functionally divided into three areas from the upper side: a pallet storage area AR1, a workpiece separation area AR2, and a carriage storage area AR3. In the pallet storage area AR1, which is the uppermost area, n (n is an integer of 2 or more) pallet storage units P1 to Pn for storing and holding the pallet 7 are provided in parallel along the up-down direction. The pallet 7 can also be stored in the workpiece separation area AR2 positioned in the middle section. The workpiece separation device 93 is provided in the workpiece separation area AR2. A carriage 8 having wheels and moving in the front-rear direction is stored in the carriage storage area AR3 which is the lowermost area.

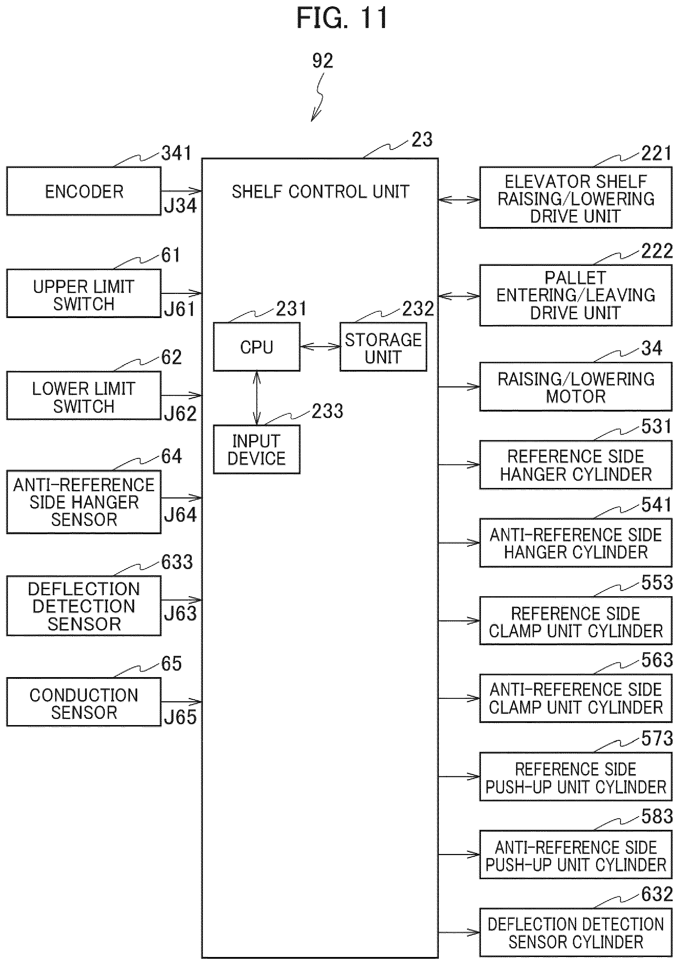

Further, as illustrated in FIG. 2, the pallet shelf device 92 includes an elevator shelf 22, an elevator shelf raising/lowering drive unit 221, and a shelf control unit 23. As illustrated in FIG. 11, the shelf control unit 23 includes a central processing unit (CPU) 231, a storage unit 232, and an input device 233.

As illustrated in FIGS. 1 and 2, the elevator shelf 22 is supported by the front left frame 21a1 and the front right frame 21a2, and projects forward. The elevator shelf 22 is raised and lowered in the up-down direction by the elevator shelf raising/lowering drive unit 221 installed on the upper part of the frame body 21 (see arrow DR2). The elevator shelf 22 includes a pallet entering/leaving drive unit 222 (see FIG. 2). The elevator shelf 22 is held at a height position corresponding to each of the pallet storage units P1 to Pn, and the pallet 7 is transferred to and received from each of the pallet storage units P1 to Pn by the operation of the pallet entering/leaving drive unit 222 (see arrow DR3). FIG. 2 illustrates the transfer and reception of the pallet 7 (indicated by a solid line) between the pallet storage unit P3 and the elevator shelf 22 (indicated by a solid line) (see arrow DR3).

As illustrated in FIG. 2, the elevator shelf 22 is also held at a height position corresponding to the workpiece separation area AR2, and the pallet 7 is transferred to and received from the workpiece separation device 93 by the operation of the pallet entering/leaving drive unit 222 (see arrow DR4). The pallet shelf device 92 stores the pallet 7 which is transferred to and received from the workpiece separation device 93 in the empty storage unit of the pallet storage units P1 to Pn. The pallet shelf device 92 also transfers the pallet 7 which is received from any of the pallet storage units P1 to Pn to the workpiece separation area AR2.

The operation of the elevator shelf raising/lowering drive unit 221 and the pallet entering/leaving drive unit 222 is controlled by the shelf control unit 23.

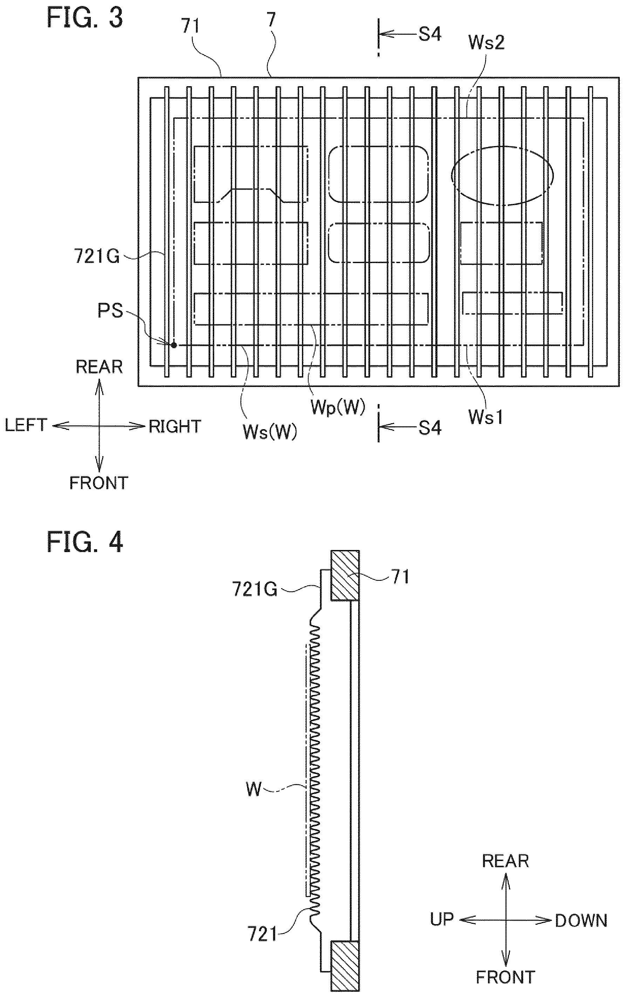

FIG. 3 is a top view of the pallet 7 of the pallet shelf device 92. FIG. 4 is a cross-sectional view at S4-S4 position of FIG. 3. As illustrated in FIGS. 3 and 4, the pallet 7 includes a frame 71 that is a rectangular frame body, and a plurality of workpiece supports 721G that are inserted into and supported by the frame 71. The workpiece supports 721G are rectangular plate-like members. At the upper edge portion of the workpiece supports 721G, spire portions 721 which becomes thinner toward the upper side are continuously formed.

The plurality of workpiece supports 721G are mounted in parallel in the left-right direction. The respective workpiece supports 721G are in a standing posture such that the spire portions 721 extend in the front-rear direction by facing upward. The sheet metal workpiece W is placed on the spire portions 721. Specifically, the workpiece W supported by the workpiece support 721G is substantially in point contact with the tip ends of the plurality of spire portions 721.

An original position PS is set at the front left of the workpiece support 721G. The original position PS is an intersection point between the X-axis (left-right direction) and the Y-axis (front-rear direction) on the horizontal two-axis control, and the operation of the laser processing head 12 in the X-axis and the Y-axis is controlled with reference to the original position PS. The workpiece W is placed on the workpiece support 721G in a posture in which the left front corner part of the workpiece W coincides with the original position PS and the two orthogonal sides are in the left-right direction and the front-rear direction regardless of the size.

Referring back to FIG. 1, in the laser processing machine 91, laser cutting is performed on the workpiece W placed on the pallet 7 by the laser beam Ls. Thus, the workpiece W includes a product Wp whose outer shape is cut, and a skeleton Ws which is the remaining workpiece other than the product Wp, as illustrated in FIG. 3. That is, the skeleton Ws is a plate-like residual material which includes the edge portion of the workpiece W and in which the product Wp is cut out. The edge portion including the original position PS at the front of the skeleton Ws is defined as a first edge portion Ws1, and the opposite edge portion thereof is defined as a second edge portion Ws2.

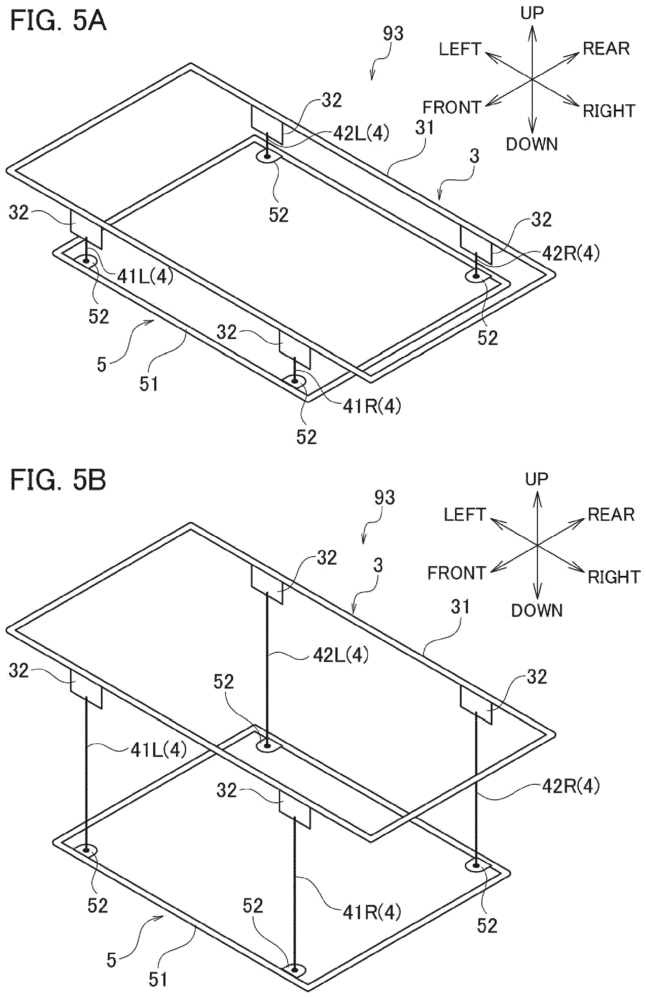

Next, the workpiece separation device 93 which is arranged in the workpiece separation area AR2 (see FIG. 1) of the pallet shelf device 92 will be described in detail. First, an outline thereof will be described with reference to FIGS. 5A and 5B. FIG. 5A is a schematic diagram illustrating a schematic configuration and operation of the workpiece separation device 93 provided in the pallet shelf device 92, and is a diagram illustrating a state in which the basic frame body 51 is raised. FIG. 5B is a schematic diagram illustrating a schematic configuration and operation of the workpiece separation device 93 provided in the pallet shelf device 92, and is a diagram illustrating a state in which the basic frame body 51 is lowered.

The workpiece separation device 93 includes a raising/lowering unit 3, and a separation unit 5 hanging from the raising/lowering unit 3. The raising/lowering unit 3 has a frame body 31 and raising/lowering chain support units 32. The frame body 31 is formed into a rectangular shape by a pair of frames arranged apart in the front-rear direction and a pair of frames arranged apart in the left-right direction. The raising/lowering chain support units 32 are installed in a pair of frames arranged apart in the front-rear direction, which are provided apart in the left-right direction.

Respective string-like members 4 hang downward from the four raising/lowering chain support units 32. In this example, the string-like members 4 are chains, which will be described as raising/lowering chains 4. The raising/lowering chain support units 32 raise and lower the raising/lowering chains 4. Of the four raising/lowering chains 4, the two chains on the front side are a front left raising/lowering chain 41L and a front right raising/lowering chain 41R, which raise and lower synchronously. Meanwhile, the two chains are on the rear side are a rear left raising/lowering chain 42L and a rear right raising/lowering chain 42R, which raise and lower synchronously.

The separation unit 5 has the basic frame body 51 and raising/lowering chain connection units 52. The basic frame body 51 is formed into a rectangular shape by a pair of metal frames arranged apart in the front-rear direction and a pair of metal frames arranged apart in the left-right direction. The raising/lowering chain connection units 52 are respectively provided in a pair of frames arranged apart in the front-rear direction, which are provided separately in the left-right direction. The four raising/lowering chain connection units 52 are positioned at positions corresponding to the four raising/lowering chain support units 32 of the raising/lowering unit 3, and are connected to the tip ends of the raising/lowering chains 4 hanging from the respective raising/lowering chain support units 32. The separation unit 5 is hung in a horizontal posture through the four raising/lowering chains 4 extending in the vertical direction by the raising/lowering unit 3 in a horizontal posture.

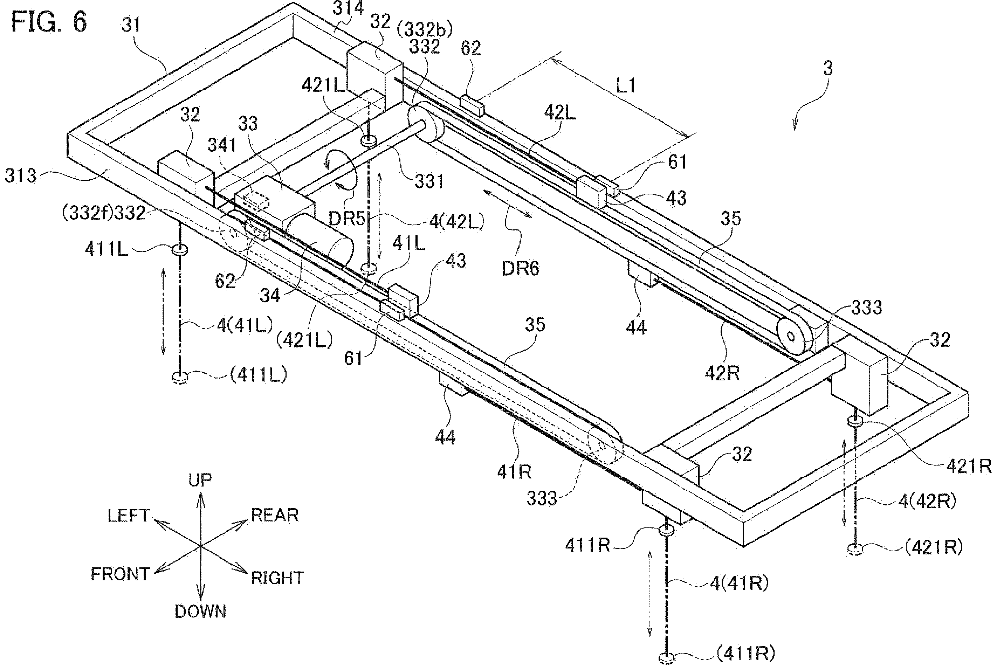

Next, the raising/lowering unit 3 will be described in detail with reference to FIG. 6. FIG. 6 is a perspective view of the raising/lowering unit 3 provided in the workpiece separation device 93 seen from the right front obliquely upward. As illustrated in FIG. 6, the raising/lowering unit 3 includes a gearbox 33, a shaft 331, drive sprockets 332, driven sprockets 333, a raising/lowering motor 34, synchronization chains 35, upper limit switches 61, and lower limit switches 62 in addition to the frame body 31 and the raising/lowering chain supports 32 described above.

The frame body 31 includes a front frame 313 and a rear frame 314, and is formed into a rectangular shape with long left and right sides when seen in a top view. The front frame 313 is a frame extending left and right in the front side of the frame body 31, and the rear frame 314 is a frame extending left and right in parallel with the front frame 313 in the rear side of the frame body 31.

The gearbox 33 and the raising/lowering motor 34 are attached to a portion of the front frame 313 positioned on the left side from the center. The operation of the raising/lowering motor 34 is controlled by the shelf control unit 23 (see FIG. 11). The gearbox 33 has an encoder 341. The encoder 341 measures the rotational speed of the raising/lowering motor 34, and outputs the measured rotational speed information J34 to the shelf control unit 23 (see FIG. 11).

The gearbox 33 transmits the rotation of the raising/lowering motor 34 to the shaft 331 extending in the front-rear direction. The drive sprockets 332 are fixed to both ends of the shaft 331. Among the pair of drive sprockets 332, the one fixed to the front end of the shaft 331 is a drive sprocket 332f, and the one fixed to the rear end is a drive sprocket 332b. When the raising/lowering motor 34 rotates, the pair of drive sprockets 332 rotate synchronously in the rotation direction corresponding to the rotation direction of the raising/lowering motor 34.

A pair of driven sprockets 333 are rotatably attached to the respective right portions of the front frame 313 and the rear frame 314 about an axis extending in the front-rear direction. The endless loop-like synchronization chain 35 is bridged between the front-side drive sprocket 332 and the front-side driven sprocket 333 along the front frame 313.

One end (right end) of the front left raising/lowering chain 41L is connected to the approximate center in the left-right direction of FIG. 6 in the portion running on the upper side of the front-side synchronization chain 35 by a connector 43. The front left raising/lowering chain 41L extends leftward from the connector 43 along the synchronization chain 35, and hangs downward in the front left position of the raising/lowering unit 3 through the left-side raising/lowering chain support unit 32. A fixture 411L is attached to the lower end of the front left raising/lowering chain 41L hanging downward.

One end (left end) of the front right raising/lowering chain 41R is connected to the approximate center in the left-right direction of FIG. 6 in the portion running on the lower side of the front-side synchronization chain 35 by a connector 44. The front right raising/lowering chain 41R extends rightward from the connector 44 along the synchronization chain 35, and hangs downward in the front right position of the raising/lowering unit 3 through the right-side raising/lowering chain support unit 32. A fixture 411R is attached to the lower end of the front right raising/lowering chain 41R hanging downward.

The synchronization chain 35 is also bridged between the rear-side drive sprocket 332 and the rear-side driven sprocket 333. One end (right end) of the rear left raising/lowering chain 42L is connected to the approximate center in the left-right direction of FIG. 6 in the portion running on the upper side of the rear-side synchronization chain 35 by a connector 43. The rear left raising/lowering chain 42L extends leftward from the connector 43 along the synchronization chain 35, and hangs downward in the rear left position of the raising/lowering unit 3 through the left-side raising/lowering chain support unit 32. A fixture 421L is attached to the lower end of the rear left raising/lowering chain 42L hanging downward.

One end (left end) of the rear right raising/lowering chain 42R is connected to the approximate center in the left-right direction of FIG. 6 in the portion running on the lower side of the rear-side synchronization chain 35 by a connector 44. The rear right raising/lowering chain 42R extends rightward from the connector 44 along the synchronization chain 35, and hangs downward in the rear right position of the raising/lowering unit 3 through the right-side raising/lowering chain support unit 32. A fixture 421R is attached to the lower end of the rear right raising/lowering chain 42R hanging downward.

In this structure, when the raising/lowering motor 34 rotates, the rotation rotates the shaft 331 and the drive sprockets 332 connected to the shaft 331 via the gearbox 33 (see arrow DR5). When the drive sprockets 332 rotate, a pair of the front and rear synchronization chains 35 rotate (see arrow DR6).

One ends of four raising/lowering chains 4 are connected and fixed to the pair of synchronization chains 35 by the respective connectors 43 and 44. The fixtures 411L, 411R, 421L, and 421R connected to the other ends of the respective raising/lowering chains 4 hanging downward are raised and lowered synchronously according to the rotation direction of the synchronization chains 35. The raising/lowering range is illustrated by the distance L1 in FIG. 6, and FIG. 6 illustrates the state in which the raising/lowering chains 4 are most raised.

The upper limit switch 61 and the lower limit switch 62 are attached to the rear frame 314 of the frame body 31 as switches to be switched when the connector 43 of the rear left raising/lowering chain 42L moves to a predetermined position. As illustrated in FIGS. 6 and 11, switch information J61 and switch information J62 indicating the switch ON/OFF state of the upper limit switch 61 and the lower limit switch 62 are output to the shelf control unit 23. The shelf control unit 23 controls the operation of the raising/lowering motor 34, based on the switch information J61 and the switch information J62 input from the upper limit switch 61 and the lower limit switch 62, and rotational speed information J34 input from the encoder 341.

Specifically, the shelf control unit 23 raises and lowers the raising/lowering chains 4 when the connector 43 is positioned between the upper limit switch 61 and the lower limit switch 62 in the OFF state, based on the processing program stored in the memory unit 232. For example, the shelf control unit 23 monitors the switch information J61 and J62 while raising and lowering the raising/lowering chains 4. Thereafter, when the fixture 421L is raised to reach a predetermined uppermost position, the upper limit switch 61 detects the connector 43 and switches ON. The shelf control unit 23 detects the ON state of the upper limit switch 61, and stops raising the raising/lowering chain 4. That is, the fixtures 411L, 411R, 421L, and 421R have stopped to be raised synchronously.

Further, when the fixture 421L is lowered to reach a predetermined lowest position, the lower limit switch 62 detects the connector 43 and switches ON. The shelf control unit 23 detects the ON state of the lower limit switch 62, and stops lowering the raising/lowering chain 4. That is, the fixtures 411L, 411R, 421L, and 421R have stopped to be lowered synchronously.

Further, the shelf control unit 23 grasps the positions of the fixtures 411L, 411R, 421L, and 421R in the height direction on a steady basis, based on the rotation speed information from the encoder 341. In this example, it is assumed that the portion of the raising/lowering chain 4 hanging down is lifted and raised when the raising/lowering motor 34 is in the positive rotation, and is moved down and lowered when the raising/lowering motor is in the inverse rotation.

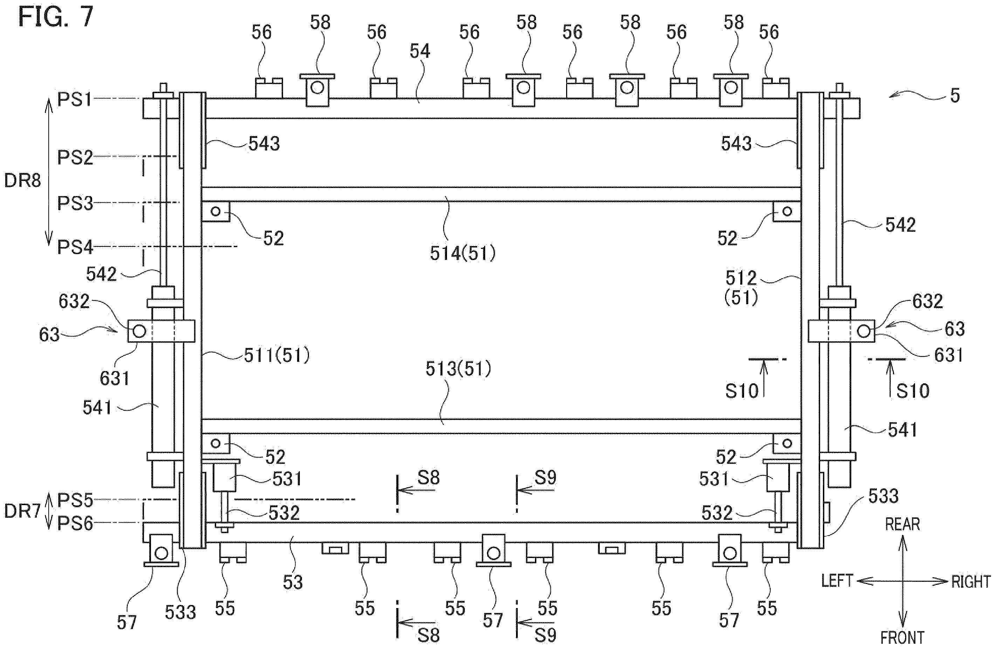

Next, the separation unit 5 will be described in detail with reference to FIG. 7. FIG. 7 is a top view illustrating the separation unit 5 provided in the workpiece separation device 93. As illustrated in FIG. 7, the separation unit 5 includes a reference side hanger frame 53, an anti-reference side hanger frame 54, reference side clamp units 55, anti-reference side clamp units 56, reference side push-up units 57, and anti-reference side push-up units 58 in addition to the basic frame body 51 and the raising/lowering chain connection units 52 described above. The reference side clamp units 55 and the anti-reference side clamp units 56 are also referred to as the first clamp units 55 and the second clamp units 56, respectively. The reference side push-up units 57 and the anti-reference side push-up units 58 are also referred to as the first push-up units 57 and the second push-up units 58, respectively.

The basic frame body 51 includes a front frame 513 and a rear frame 514, and a left frame 511 and a right frame 512, and has a long rectangular shape in the left-right direction when seen in a top view. The front frame 513 and the rear frame 514, and the left frame 511 and the right frame 512 are framed in such a way that the left frame 511 and the right frame 512 project forward and backward. The front frame 513 and the rear frame 514 extend in the left-right direction, and are separated in the front-rear direction to be arranged in parallel with each other. The left frame 511 extends in the front-rear direction, and has the left ends of the front frame 513 and the rear frame 514 connected thereto. The right frame 512 extends in the front-rear direction in parallel with the left frame 511, and has the right ends of the front frame 513 and the rear frame 514 connected thereto.

Linear guides 533 are respectively attached to the lower surfaces of the left frame 511 and the right frame 512 at the portions extending forward from the front frame 513. The reference side hanger frame 53 is supported by these two linear guides 533 so as to be movable in the front-rear direction in a posture parallel to the front frame 513 (see arrow DR7). Reference side hanger cylinders 531 are each attached to the left frame 511 and the right frame 512 at the portions extending forward from the front frame 513. The reference side hanger cylinders 531 have rods 532 entering and leaving in the front direction, and the tip ends of the rods 532 are connected to the reference side hanger frames 53.

The operation of the reference side hanger cylinders 531 is controlled by the shelf control unit 23 (see FIG. 11). The reference side hanger frame 53 is moved by the operation of the reference side hanger cylinders 531 such that the rear surface position is positioned at two positions between a fifth position PS5 serving as the rear end in the movement range in the front-rear direction and a sixth position PS6 serving as the front end in the movement range in the front-rear direction.

Linear guides 543 are respectively attached to the lower surfaces of the left frame 511 and the right frame 512 at the portions extending backward from the rear frame 514. The anti-reference side hanger frame 54 is supported by these two linear guides 543 so as to be movable in the front-rear direction in a posture parallel to the rear frame 514 (see arrow DR8). Anti-reference side hanger cylinders 541 are each attached to the left frame 511 and the right frame 512. The anti-reference side hanger cylinder 541 has rods 542 entering and leaving in the rear direction, and the tip ends of the rods 542 are connected to the anti-reference side hanger frames 54.

The operation of the anti-reference side hanger cylinders 541 is controlled by the shelf control unit 23 (see FIG. 11). The anti-reference side hanger frame 54 is moved by the operation of the anti-reference side hanger cylinders 541 such that the rear surface position is positioned at four positions from the rearmost first position PS1 to the foremost fourth position PS4 in the movement range in the front-rear direction. The position of the anti-reference side hanger frame 54 among the position PS1 to the position PS4 is detected by an anti-reference side hanger sensor 64 (see FIG. 11). The anti-reference side hanger sensor 64 outputs the detected position information of the anti-reference side hanger frame 54 as detection information J64 to the shelf control unit 23. The shelf control unit 23 appropriately selects and sets the position of the anti-reference side hanger frame 54 in the workpiece separation operation to be described later, based on the detection information J64 or the like.

In FIGS. 6 and 7, a total of four raising/lowering chain connection units 52 are provided in the basic frame body 51. The raising/lowering chain connection units 52 are the portions to which the fixtures 411L, 411R, 421L, and 421R of the raising/lowering chains 4 in the raising/lowering unit 3 are connected. The positions of the raising/lowering chain connection units 52 are associated with the positions of the raising/lowering chain support units 32 such that the raising/lowering chains 4 naturally extend in the vertical direction after the raising/lowering chains 4 are connected.

A plurality of the reference side clamp units 55 (six pieces in FIG. 7) are attached to the reference side hanger frame 53 apart in the left-right direction. A plurality of the anti-reference side clamp units 56 (six pieces in FIG. 7) are attached to the anti-reference side hanger frame 54 apart in the left-right direction. A plurality of the reference side push-up units 57 (three pieces in FIG. 7) are attached to the reference side hanger frame 53 apart in the left-right direction. A plurality of the anti-reference side push-up units 58 (four pieces in FIG. 7) are attached to the anti-reference side hanger frame 54 apart in the left-right direction.

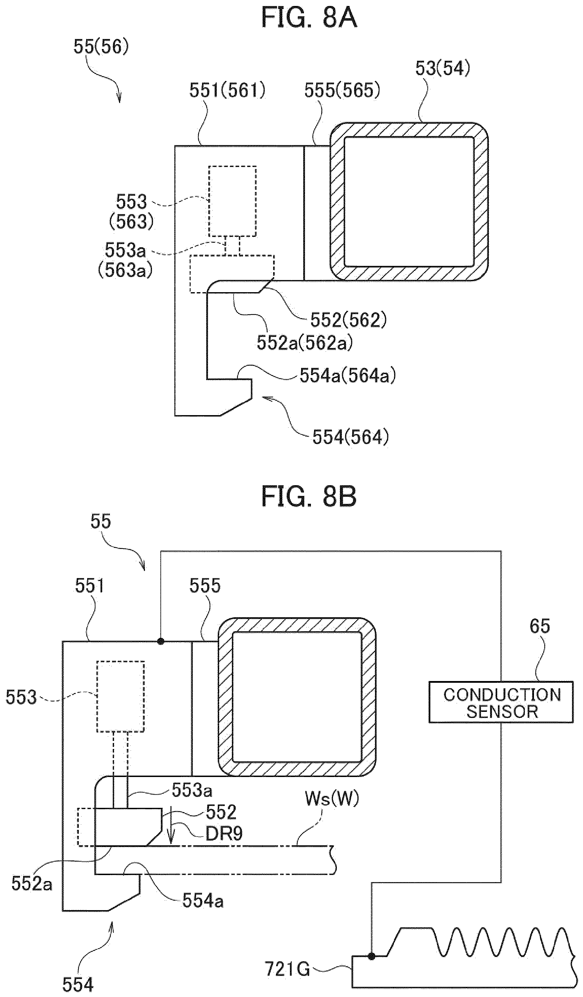

First, the reference side clamp unit 55 will be described with reference to FIG. 8. FIGS. 8A and 8B are cross-sectional views at S8-S8 position of FIG. 7, and the reference side clamp unit 55 provided in the separation unit 5 is illustrated as side views. FIG. 8A illustrates a state in which a pushing portion 552 is raised, and FIG. 8B illustrates a state in which the pushing portion 552 is lowered.

The reference side clamp unit 55 includes a body portion 551, a pushing portion 552, a reference side clamp unit cylinder 553, and a claw 554. The body portion 551 of the reference side clamp unit 55 is formed of a metal material, and is attached to the reference side hanger frame 53 by a fixture (not illustrated), such as a bolt, with an insulating plate 555 interposed therebetween. As a result, the reference side clamp unit 55 is electrically insulated from the basic frame body 51 including the reference side hanger frame 53.

The body portion 551 has a generally box-like housing and a claw 554 having a tip end bent toward the reference side hanger frame 53 at a lower part. The upper surface of the claw 554 is a horizontal lower abutment surface 554a. The reference side clamp unit cylinder 553 is housed in the inner portion of the body portion 551. Under the control of the shelf control unit 23, the reference side clamp unit cylinder 553 causes the rod 553a to enter and leave downward by the flow of air supplied from the outside. The flat plate-like pushing portion 552 is attached to the lower end of the rod 553a. The lower surface of the pushing portion 552 is an upper abutment surface 552a parallel to the lower abutment surface 554a.

As illustrated in FIG. 8A, the reference side clamp unit 55 is normally in a retracted state in which the rod 553a is raised and pulled into the body portion 551. The shelf control unit 23 operates the reference side clamp unit cylinder 553 as necessary, and lowers the pushing portion 552 as illustrated in FIG. 8B (see arrow DR9). As a result, a workpiece W or a skeleton Ws is held between the lower abutment surface 554a and the upper abutment surface 552a.

The body portion 551 is electrically conductive with at least one of the lower abutment surface 554a and the upper abutment surface 552a. As illustrated in FIG. 8B, the body portion 551 is electrically connected to the workpiece support 721G, which is an assembly of the spire portions 721, via a conduction sensor 65. The conduction sensor 65 detects whether the workpiece support 721G and the body portion 551 are in a conductive state, and outputs detection information J65 including the detection result to the shelf control unit 23 (see FIG. 11).

Since the anti-reference side clamp unit 56 has the same structure as the reference side clamp unit 55, the reference numerals as the anti-reference side clamp unit 56 are illustrated in parentheses in FIG. 8A.

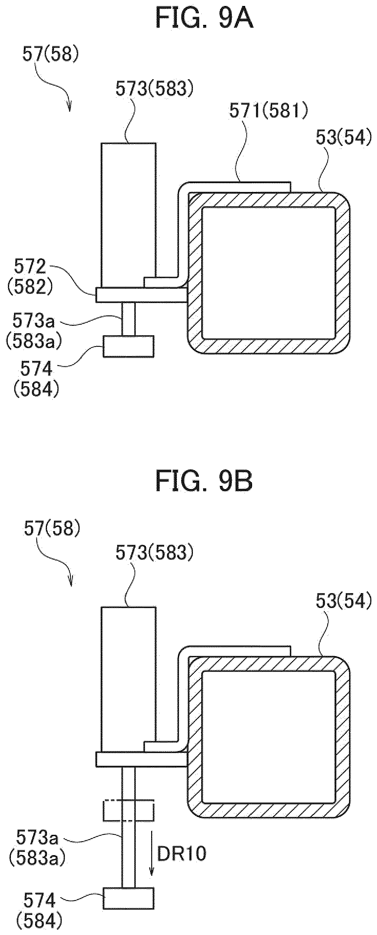

Next, the reference side push-up unit 57 will be described with reference to FIG. 9. FIGS. 9A and 9B are cross-sectional views at S9-S9 position of FIG. 7, and the reference side push-up unit 57 provided in the separation unit 5 is illustrated as side views. FIG. 9A illustrates a state in which the pusher 574 is raised, and FIG. 9B illustrates a state in which the pusher 574 is lowered.

The reference side push-up unit 57 includes a bracket 571, a plate 572, and a reference side push-up unit cylinder 573. The bracket 571 is attached to the reference side hanger frame 53 by a fixture (not illustrated) such as a bolt. The lower portion of the bracket 571 is connected to the plate 572, and the plate 572 supports the reference side push-up unit cylinder 573 in a standing posture causing the rod 573a to enter and leave downward. The flat plate-like pusher 574 is attached to the lower end of the rod 573a.

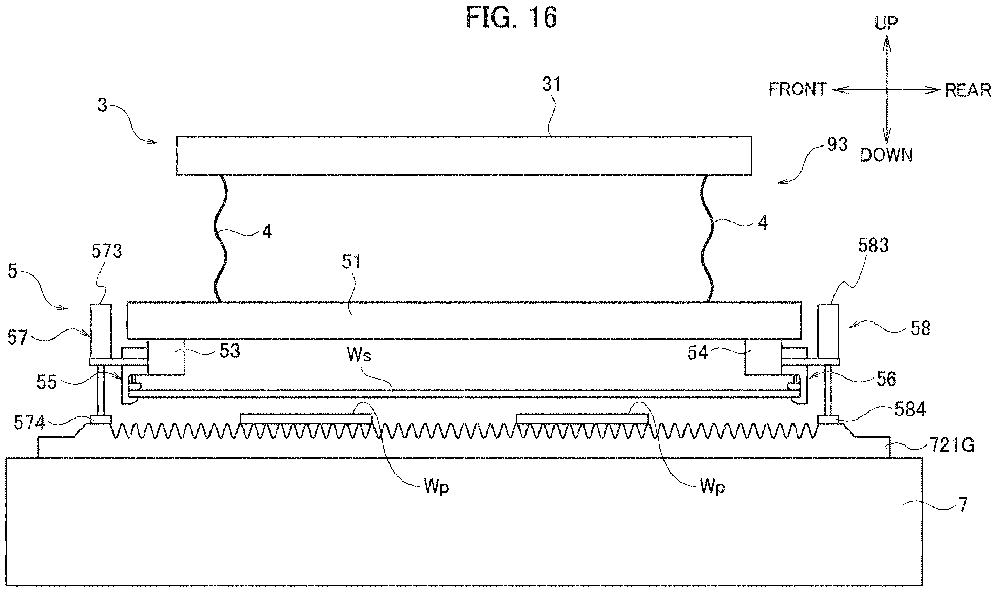

As illustrated in FIG. 9A, the reference side push-up unit 57 is normally in a retracted state in which the rod 573a is raised and pulled into the reference side push-up unit cylinder 573. The shelf control unit 23 operates the reference side push-up unit cylinder 573 as necessary, and lowers the pusher 574 as illustrated in FIG. 9B (see arrow DR10). The reference side push-up unit 57 is attached to the reference side hanger frame 53 at a position where the lowered pusher 574 abuts on the workpiece support 721G of the pallet 7 (see FIG. 16).

Since the anti-reference side push-up unit 58 has the same structure as the reference side push-up unit 57, the reference numerals as the anti-reference side push-up unit 58 are illustrated in parentheses in FIG. 9A. The anti-reference side push-up unit 58 is attached to the anti-reference side hanger frame 54 at a position where the lowered pusher 584 abuts on the workpiece support 721G of the pallet 7 (see FIG. 16).

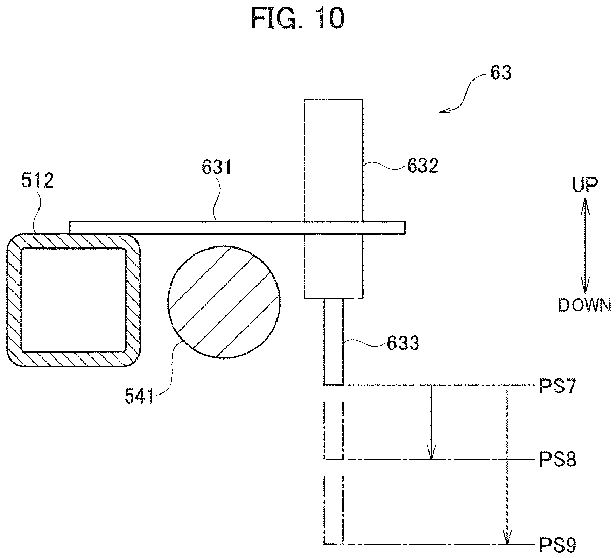

As illustrated in FIG. 7, the separation unit 5 has a deflection detection sensor unit 63. The deflection detection sensor unit 63 is attached to the right frame 512 of the basic frame body 51, for example. FIG. 10 is a cross-sectional view at S10-S10 position of FIG. 7, in which the deflection detection sensor unit 63 provided in the separation unit 5 is illustrated as a side view.

The deflection detection sensor unit 63 includes a bracket 631, a deflection detection sensor cylinder 632, and a deflection detection sensor 633. The bracket 631 has one end fixed to the right frame 512 by a fixture (not illustrated) such as a bolt, and holds the deflection detection sensor cylinder 632 at the other end side by straddling the anti-reference side hanger cylinder 541. The deflection detection sensor cylinder 632 is in a posture to cause the rod-shaped deflection detection sensor 633, which is also a rod, to enter and leave downward.

If necessary, the shelf control unit 23 operates the deflection detection sensor cylinder 632 to selectively maintain the measurement position of the deflection detection sensor 633 at three positions different in the height direction. Specifically, each of the three measurement positions is an uppermost standby position PS7, a lowermost skeleton accumulation height detection position PS9, and a skeleton deflection detection position PS8 which is an intermediate position between the position PS7 and the position PS9.

As illustrated in FIGS. 1 and 3, the workpiece separation device 93 described above performs a workpiece separation operation in which only the skeleton Ws is separated from the workpiece W, which is cut and separated into the product Wp and the residual skeleton Ws by the laser processing machine 91 in a state the workpiece W is placed on the pallet 7, and is transferred onto the carriage 8. More specifically, in the laser processing process, the pallet 7 on which the workpiece W is placed is conveyed into the laser processing machine 91, and the workpiece W is cut into the product Wp and the skeleton Ws by laser cutting.

After the laser processing process is performed, the pallet 7 on which the product Wp and the skeleton Ws are placed is transferred from the laser processing machine 91 to the workpiece separation area AR2 of the pallet shelf device 92. The workpiece separation device 93 performs the workpiece separation operation, and separates the skeleton Ws from the product Wp by clamping and lifting the peripheral edges of the skeleton Ws on the pallet 7. At this time, the workpiece separation method including a process of lifting the second peripheral edge Ws2 which is one peripheral edge of the peripheral edges is performed, thereby separating the welded portion more reliably. After the skeleton Ws is separated, the pallet 7 on which only the product Wp is placed is retracted in order to take the product Wp out of the pallet shelf device 92, and the clamped skeleton Ws is loaded on the carriage 8 waiting below the pallet 7.

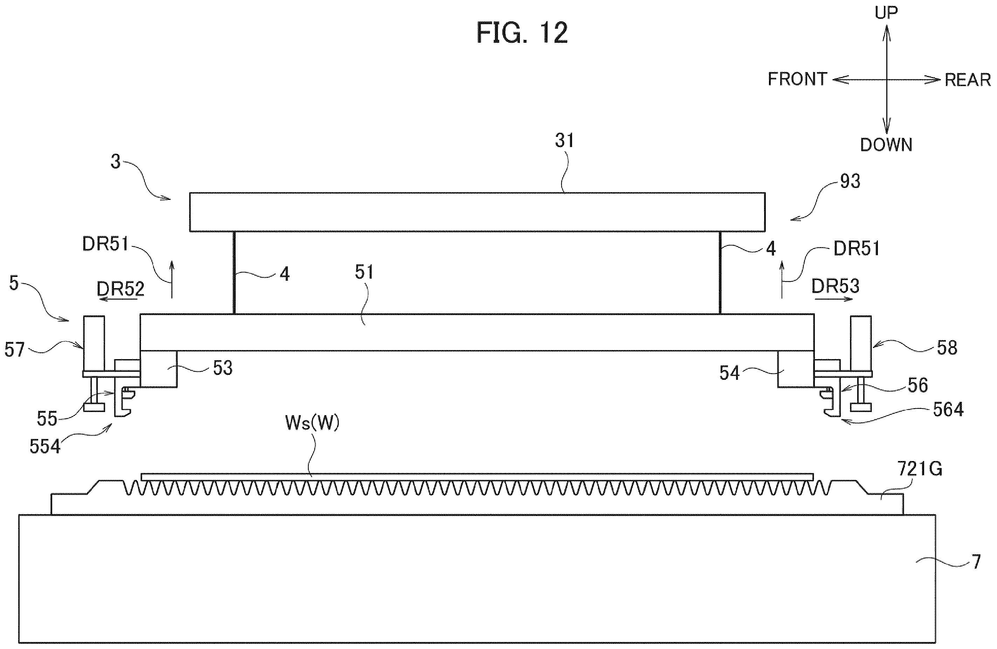

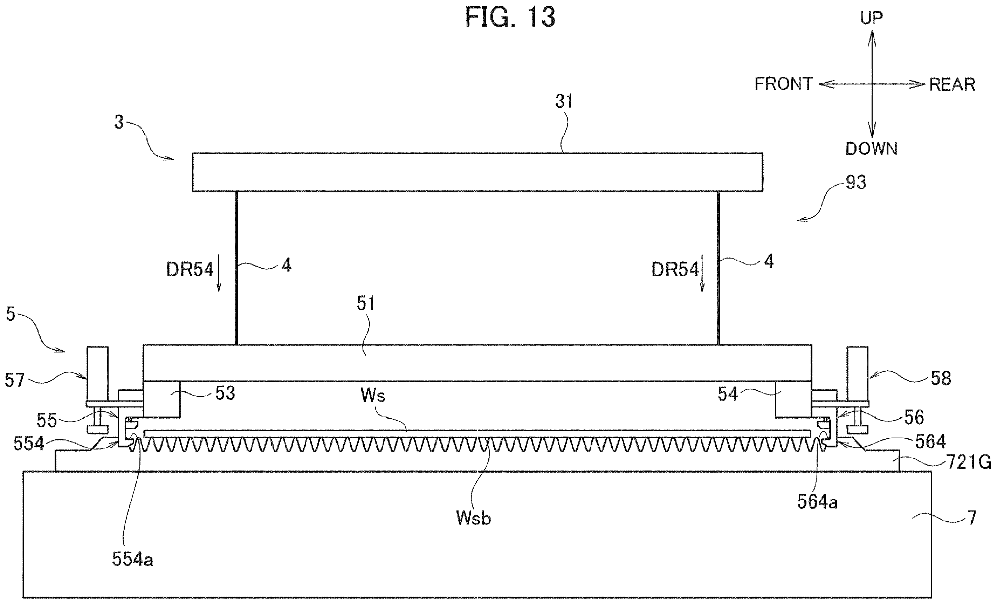

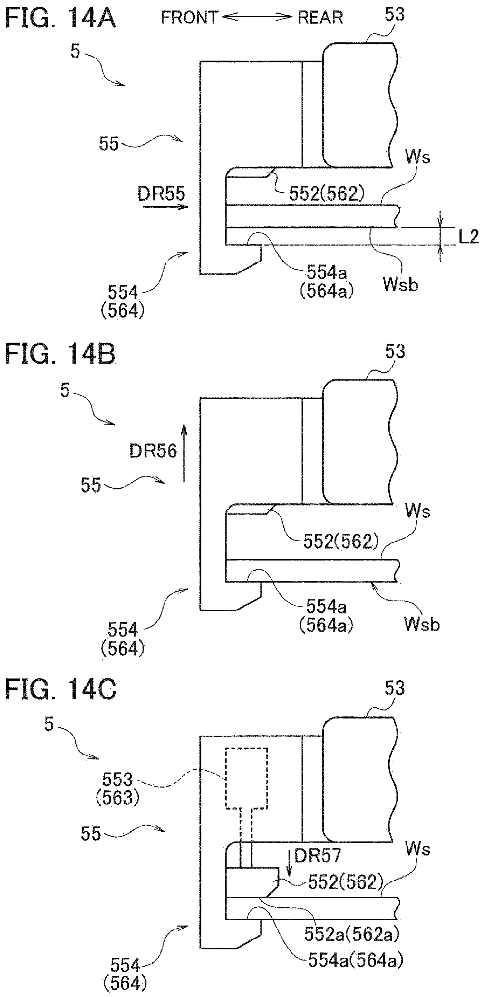

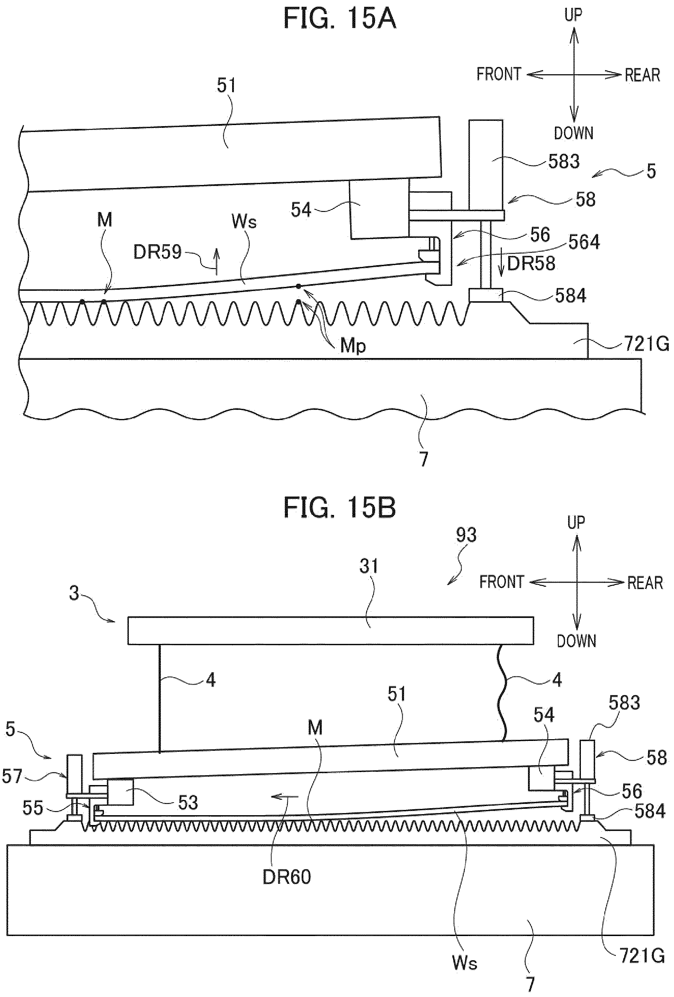

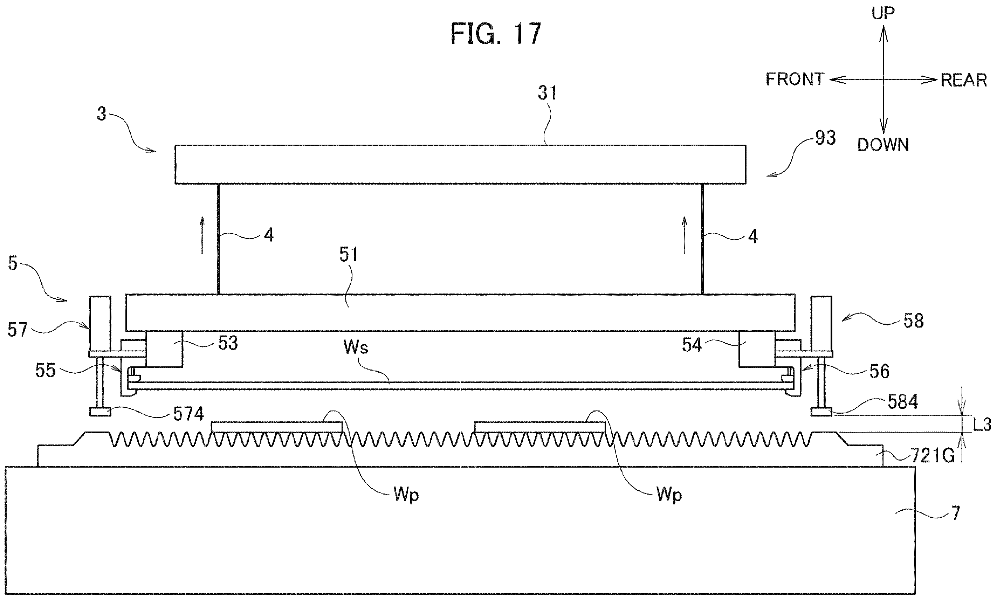

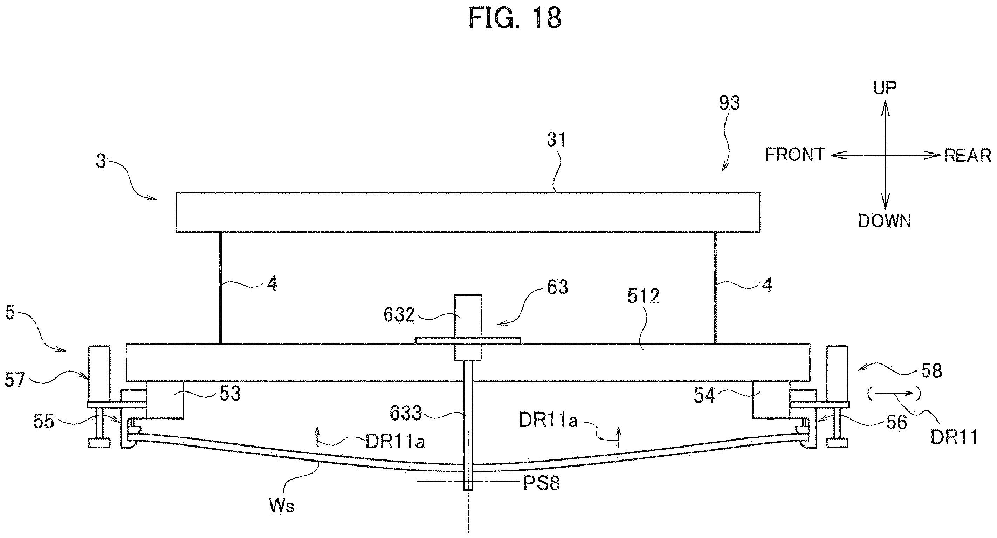

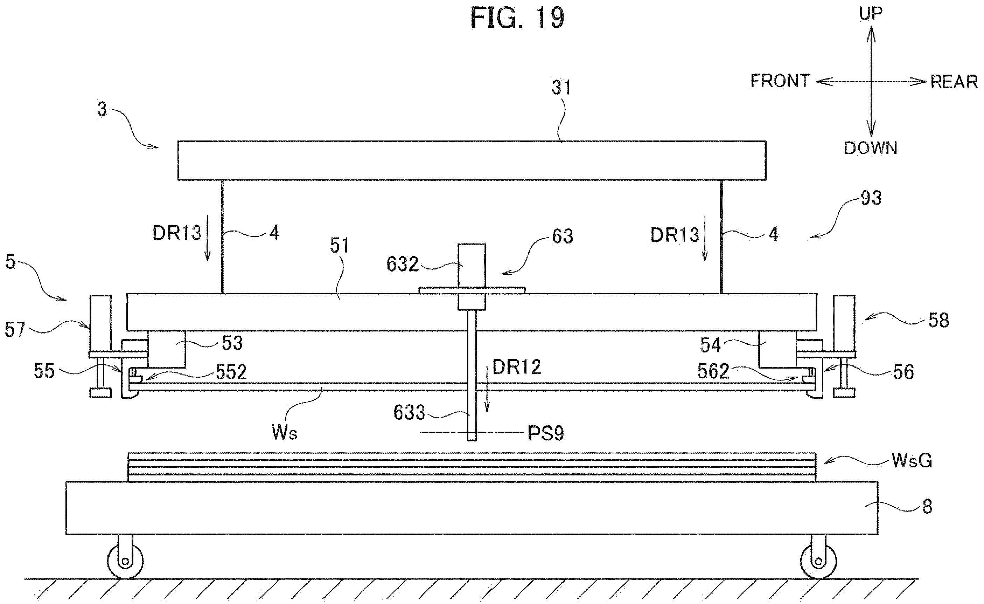

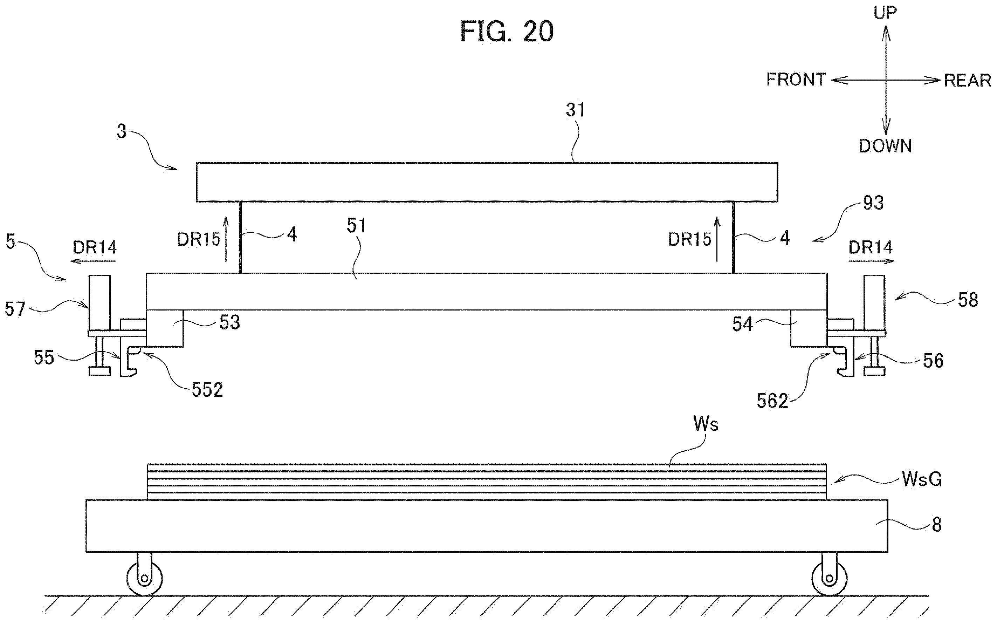

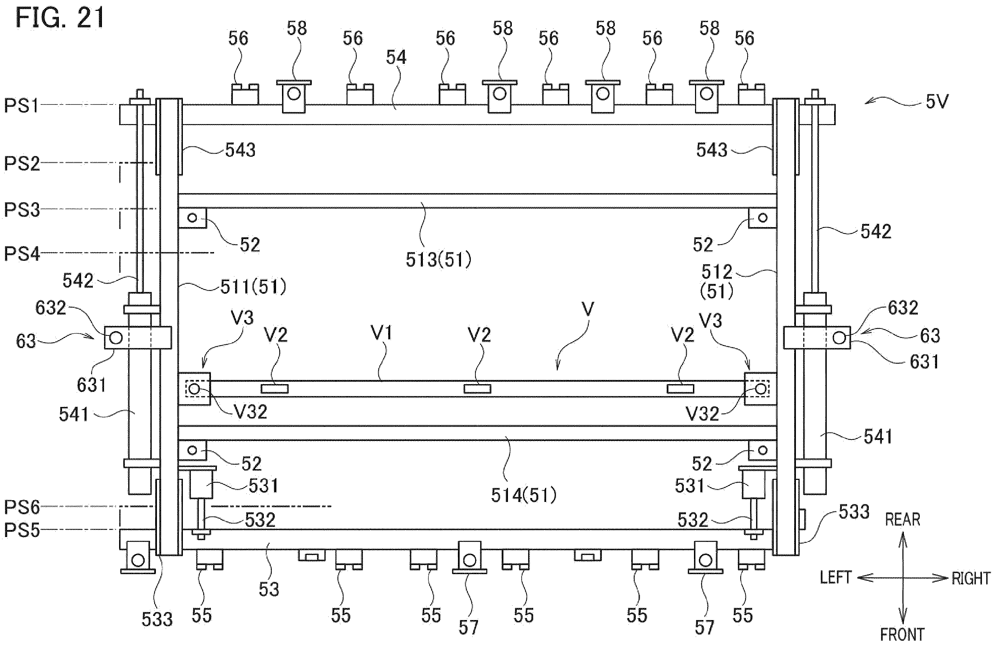

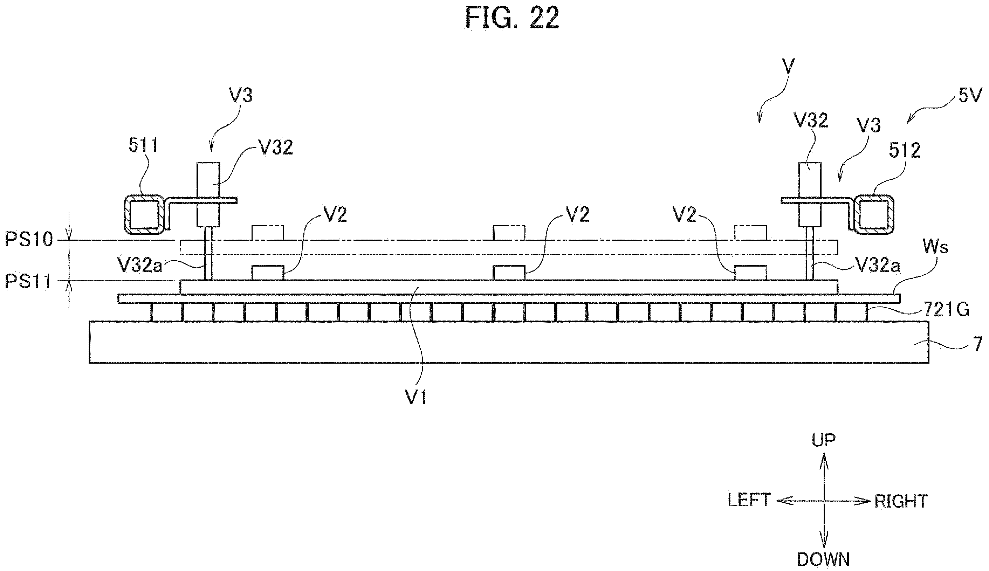

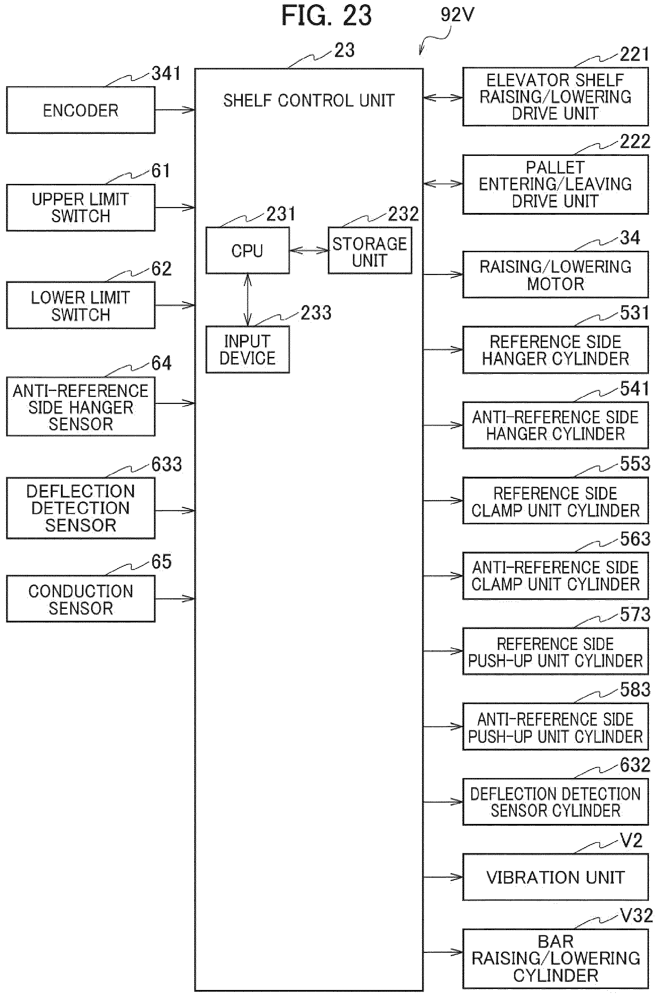

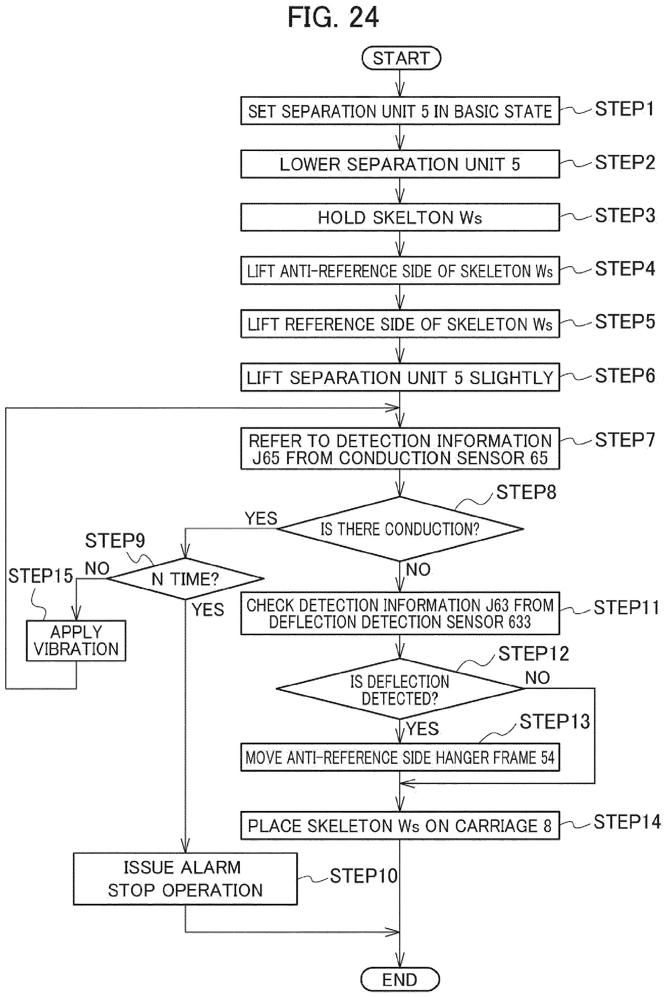

The details of the workpiece separation operation will be described below with reference to FIGS. 12 to 24. FIG. 12 is a first diagram illustrating an operation of the workpiece separation device 93. FIG. 13 is a second diagram illustrating the operation of the workpiece separation device 93. FIGS. 14A to 14C are third diagrams illustrating an operation for holding a skeleton Ws of the reference side clamp unit 55, in which FIG. 14A illustrates a first holding operation, FIG. 14B illustrates a second holding operation, and FIG. 14C illustrates a third holding operation. FIGS. 15A and 15B are fourth diagrams illustrating the operation of the workpiece separation device 93, in which FIG. 15A is a partially enlarged view of the separation unit 5, and FIG. 15B is an overall view of the workpiece separation device 93. FIG. 16 is a fifth diagram illustrating the operation of the workpiece separation device 93. FIG. 17 is a sixth diagram illustrating the operation of the workpiece separation device 93. FIG. 18 is a seventh diagram illustrating the operation of the workpiece separation device 93. FIG. 19 is an eighth diagram illustrating the operation of the workpiece separation device 93. FIG. 20 is a ninth diagram illustrating the operation of the workpiece separation device 93. FIG. 21 is a top view illustrating a separation unit 5V to which a vibration device V is attached. FIG. 22 is a side view illustrating an operation of the vibration device V. FIG. 23 is a block diagram illustrating a configuration of a pallet shelf device 92V having the separation unit 5V. FIG. 24 is a flow diagram of a workpiece separation operation performed by the pallet shelf device 92 and the pallet shelf device 92V.

FIG. 12 illustrates a pallet 7 transferred to the pallet shelf device 92 after laser processing, and the workpiece separation device 93 disposed above the pallet 7. In this example, the workpiece W is a rectangular sheet metal of the largest size among the sizes that can be placed on the pallet 7. In a case where the workpiece W of the largest size is placed on the workpiece support 721G with the left front corner portion aligned with the original position PS (see FIG. 3), the rear edge of the workpiece W does not interfere with the anti-reference side clamp unit 56 when the anti-reference side hanger frame 54 is in the position PS1, and interferes with the anti-reference side clamp unit 56 when the anti-reference side hanger frame 54 is in the position PS2, as illustrated in FIGS. 7 and 12. In addition, the front edge of the workpiece W does not interfere with the reference side clamp unit 55 when the reference side hanger frame 53 is in the position PS6, and interferes with the reference side clamp unit 55 when the reference side hanger frame 53 is in the position PS5.

After finishing the processing in the laser processing machine 91, before the pallet 7 is transferred to the lower part of the separation unit 5 of the pallet shelf device 92, the shelf control unit 23 positively rotates the raising/lowering motor 34 (see FIG. 6) to raise the separation unit 5 by the raising/lowering chains 4 (see FIG. 12: arrow DR51). The shelf control unit 23 also moves the reference side hanger frame 53 to the foremost position PS6 by operating the reference side hanger cylinder 531 (see arrow DR52). The shelf control unit 23 moves the anti-reference side hanger frame 54 to the rearmost position PS1 by operating the anti-reference side hanger cylinder 541 (see arrow DR53). The shelf control unit 23 sets a state of the separation unit 5 to a basic state as illustrated in FIG. 12 (FIG. 24: Step 1).

### (First process: lowering of separation unit 5)

As illustrated in FIG. 13, the shelf control unit 23 inversely rotates the raising/lowering motor 34 (see FIG. 6) to move the raising/lowering chains 4 downward, thereby lowering the separation unit 5 to a predetermined height position (see arrow DR54) (FIG. 24: Step 2). The predetermined height position is a position where the lower abutment surface 554a of the reference side clamp unit 55 and the lower abutment surface 564a of the anti-reference side clamp unit 56 are lower than the lower surface Wsb of the skeleton Ws by a predetermined distance L2. The predetermined distance L2 is illustrated in FIG. 14A and is, for example, 9 mm.

### (Second process: holding step of skeleton Ws) (FIG. 24: Step 3)

After lowering the separation unit 5 to a predetermined height position, the shelf control unit 23 operates the reference side hanger cylinders 531 to move the reference side hanger frame 53 from the foremost position PS6 to the rearmost position PS5, as illustrated in FIGS. 7 and 14A (see arrow DR55). Thus, the lower abutment surface 554a enters the lower side of the lower surface Wsb of the skeleton Ws.

Next, the shelf control unit 23 positively rotates the raising/lowering motor 34 (see FIG. 6) to raise the separation unit 5 by the predetermined distance L2. As a result, the reference side clamp unit 55 and the anti-reference side clamp unit 56 raise by the predetermined distance L2 (see arrow DR56 in FIG. 14B), and the lower abutment surfaces 554a and 564a abut on the lower surface Wsb of the skeleton Ws. FIG. 14B illustrates a state in which the lower abutment surface 554a abuts on the lower surface Wsb.

The shelf control unit 23 then operates a plurality of the reference side clamp unit cylinders 553 to push the pushing portions 552 downward (see FIG. 14C, arrow DR57). In addition, the shelf control unit 23 simultaneously operates a plurality of the anti-reference side clamp unit cylinders 563 to push the pushing portions 562 downward. As a result, the skeleton Ws is held in such a way that the first edge Ws1 as the front edge (see FIG. 3) is sandwiched between the upper abutment surfaces 552a of the pushing portions 552 and the lower abutment surfaces 554a of the claws 554 of the plurality of reference side clamp units 55. Further, the skeleton Ws is held in such a way that the second edge Ws2 as the rear edge (see FIG. 3) is sandwiched between the upper abutment surfaces 562a of the pushing portions 562 and the lower abutment surfaces 564a of the claws 564 of the plurality of anti-reference side clamp units 56. That is, the skeleton Ws is held by the separation unit 5.

### (Third process: lifting the anti-reference side of skeleton Ws ••• First edge lifting step) (FIG. 24: Step 4)

When the skeleton Ws is held by the separation unit 5, the shelf control unit 23 operates the anti-reference side push-up unit cylinder 583 to push the pusher 584 downward (see arrow DR58), as illustrated in FIG. 15A. Since the lowering stroke of the pusher 584 is sufficiently long, the pusher 584 pushes the workpiece support 721G downward in an attempt to further push it down even if the pusher 584 comes into contact with the workpiece support 721G. With respect to this downward pushing force, the workpiece support 721G is strongly fixed to the pallet 7 firmly which is held by the pallet shelf device 92, and therefore does not move downward. For this reason, the pusher 584 receives a reaction force from the workpiece support 721G, and the reaction force causes the anti-reference side push-up unit 58, the anti-reference side hanger frame 54, and the anti-reference side clamp unit 56 to be pushed upward since they are integrated as the same rigid body.

As the anti-reference side clamp unit 56 is pushed up, the rear edge of the skeleton Ws clamped by the anti-reference side clamp unit 56 is lifted (see arrow DR59). Here, if there is a welded portion M in which the skeleton Ws and the workpiece support 721G are welded to each other, the welded portion M is peeled off and separated because the skeleton Ws is forcibly lifted from the rear edge thereof, resulting in the remains of a welded portion Mp remaining in each of the skeleton Ws and the workpiece support 721G. When the rear edge of the skeleton Ws starts to be lifted, the welded portion M resists not to be lifted. However, as the rear edge of the skeleton Ws is lifted, the skeleton Ws deforms downward convexly. The portion to be peeled off gradually moves forward, and the separation of the welded portion M proceeds from the rear side to the front side. This is indicated by arrow DR60 in FIG. 15B.

In FIG. 15B, which illustrates a state in which the pusher 584 is pushed out to the maximum, the anti-reference side clamp unit 56 is in the most lifted position. In this state, the basic frame body 51 is in a posture in which the rear side is highly inclined. Accordingly, the members, which are attached to the basic frame body 51, such as the reference side clamp unit 55 and the anti-reference side clamp unit 56 are inclined in the same way; however, only the basic frame body 51 is inclined in FIG. 15B for the sake of convenience.

### (Fourth process: lifting the reference side of skeleton Ws ••• Second edge lifting step) (FIG. 24: Step 5)

As illustrated in FIG. 16, after the operation of the anti-reference side push-up unit cylinder 583 is completed, the shelf control unit 23 also operates the reference side push-up unit cylinder 573 to push down the pusher 574. As a result, the skeleton Ws on the reference side is also lifted from the front edge thereof in the same way as the anti-reference side, and the peeling and separation of the welded portion M proceeds from the front edge side to the rear side.

As illustrated in FIG. 16, the pusher 574 of the reference side push-up unit 57 and the pusher 584 of the anti-reference side push-up unit 58 abut on the workpiece support 721G in a downwardly extended state. As a result, the basic frame body 51 is lifted together with the skeleton Ws that is held, and placed on the workpiece support 721G. Meanwhile, the raising/lowering chains 4 become slack. In many cases, the welded portion M is separated by a peeling operation performed by pushing down the pusher 574. The skeleton Ws is then lifted apart from the product Wp and the workpiece support 721G, leaving the product Wp on the workpiece support 721G.

The shelf control unit 23 then rotates the raising/lowering motor 34 (see FIG. 6) in the positive direction, and performs a raising step that lifts the separation unit 5 slightly, as illustrated in FIG. 17 (FIG. 24: Step 6). Specifically, the pusher 584 is in a position apart upward by a distance L3 from the workpiece support 721G. The distance L3 is, for example, about 3 mm.

### (Fifth process: conduction detection)

As illustrated in FIG. 11, the shelf control unit 23 refers to the detection information J65 input from the conduction sensor 65 (FIG. 24: Step 7). The shelf control unit 23 determines whether there is conduction (FIG. 24: Step 8), and when it is determined that there is no conduction (No), the shelf control unit 23 performs Step 11 of FIG. 24.

When it is determined that there is conduction (Yes), the shelf control unit 23 determines whether the number of determinations that there is conduction is the predetermined N time (FIG. 24: Step 9). This value N is appropriately set. When the workpiece separation device 93 is not provided with the vibration device V which will be described later, "N = 1" is obtained, and thus the determination in Step 9 of FIG. 24 is Yes. In this case, the shelf control unit 23 issues an alarm and stops the operation of the pallet shelf device 92 (FIG. 24: Step 10). The shelf control unit 23 may stop the operation of the entire laser processing system ST in cooperation with the processing control unit 13.

### (Sixth process: deflection detection and correction)

When it is determined to be No in Step 8 of FIG. 24, the shelf control unit 23 operates the deflection detection sensor cylinder 632 of the deflection detection sensor unit 63 as illustrated in FIG. 10. The shelf control unit 23 then lowers the deflection detection sensor 633 from the uppermost position PS7 which is a standby position, to the position PS8 which is a skeleton deflection detection position.

As illustrated in FIG. 18, when peeling off the welded portion M (see FIG. 15A), the welded portion M is not easily separated, and the skeleton Ws is pulled by the workpiece support 721G, causing the skeleton Ws to deflect in such a way that the center portion in the front-rear direction becomes low in some cases. In such cases, the deflection detection sensor 633 detects whether the skeleton Ws is deflected beyond the allowable upper limit at the position PS8 (FIG. 24: Step 12). The deflection detection result is output as detection information J63 to the shelf control unit 23 (see FIG. 11). The shelf control unit 23 checks the detection information J63 (FIG. 24: Step 11), and determines whether the deflection of the skeleton Ws has been detected based on the detection information J63 (FIG. 24: Step 12).

When it is determined to be Yes in Step 12 of FIG. 24, the shelf control unit 23 moves the anti-reference side hanger frame 54 backward as illustrated by arrow DR11 of FIG. 18. As a result, the skeleton Ws is extended and corrected, thereby reducing the deflection within the allowable range (see arrows DR11a) (FIG. 24: Step 13).

### (Seventh process: placing of skeleton Ws on carriage 8)

The shelf control unit 23 moves the pallet 7 to the elevator shelf 22 when the deflection of the skeleton Ws is reduced by performing Step 13 of FIG. 24, or when it is determined to be No in Step 12 of FIG. 24. Thereafter, as illustrated in FIG. 19, the shelf control unit 23 lowers the deflection detection sensor 633 to the position PS9 which is the skeleton accumulation height detection position (see arrow DR12). At the position PS9, the deflection detection sensor 633 detects the height of a place where the skeleton Ws that is held is to be placed. When the skeleton Ws is not placed on the carriage 8, the deflection detection sensor 633 detects the height position of the placing surface of the carriage 8. When a skeleton laminated body WsG is already placed on the carriage 8, the deflection detection sensor 633 detects the height position of the uppermost surface of the skeleton laminated body WsG.

The shelf control unit 23 lowers the separation unit 5 to the height position of the position PS9 that is based on the detection information J63 from the deflection detection sensor 633 (see arrow DR13), and raises the pushing portion 552 of the reference side clamp unit 55 and the pushing portion 562 of the anti-reference side clamp unit 56. As illustrated in FIG. 20, the reference side hanger frame 53 is moved forward and the anti-reference side hanger frame 54 is moved backward, thereby releasing the skeleton Ws that is held (see arrow DR14). As a result, the skeleton Ws is placed on the skeleton laminate body WsG (FIG. 24: Step 14). Thereafter, the shelf control unit 23 raises the separation unit 5 to return to the basic state (see arrow DR15).

The workpiece separation device 93 described above lifts and separates the skeleton Ws among the product Wp and the skeleton Ws which are placed on the pallet 7 and cut into pieces. In doing so, the workpiece separation device 93 lifts one edge portion of the skeleton Ws even if the skeleton Ws is welded to the workpiece support 721G at the welded portion M, and thus the welded portion M can be easily separated, thereby making it possible to separate the skeleton Ws from the workpiece support 721G more reliably. Since the workpiece to be separated is not limited to the skeleton Ws, the workpiece separation device 93 performs the workpiece separation by means of the above-described workpiece separation method with which it is possible to separate the workpiece welded to the workpiece support 721G more reliably.

That is, an aspect of a workpiece separation device 93 includes: a raising/lowering unit 3 from which a plurality of string-like members 4 are hung down in such a way as to be raised and lowered synchronously; a separation unit 5 which is suspended by the plurality of string-like members 4; a pallet 7 which has a workpiece support 721G on which a rectangular workpiece Ws is placed and is arranged below the separation unit 5; a first clamp unit 55 which is provided in the separation unit 5, and holds a first edge portion Ws1 of the workpiece Ws placed on the workpiece support 721G; a second clamp unit 56 which holds a second edge portion Ws2 of the workpiece Ws opposite to the first edge portion Ws1; and a push-up unit 58 which receives a reaction force from the pallet 7 by pushing a pusher 584 onto the pallet 7, thereby pushing up the second clamp unit 56. As a result, the workpiece separation device 93 lifts and raises the workpiece Ws welded to the workpiece support 721G from the second edge portion Ws2 side, thereby making it possible to separate the workpiece Ws from the workpiece support 721G more reliably.

In addition, the above-described one aspect of the workpiece separation device 93 may include a conduction sensor 65 which detects whether there is conduction between either the first clamp unit 55 or the second clamp unit 56 and the workpiece support 721G. As a result, when raising the workpiece Ws, the workpiece separation device 93 can recognize that the workpiece Ws cannot be separated because it is fixed to the workpiece support 721G by welding or the like, or because it still remains in contact with the workpiece support 721G.

In a workpiece separation method according to the present embodiment in which a separation unit 5 is used, the separation unit 5 includes: a first clamp unit 55 which is suspended from a raising/lowering unit 3 to be raised and lowered, and holds a first edge portion Ws1 of a rectangular workpiece Ws; a second clamp unit 56 which holds a second edge portion Ws2 of the workpiece Ws opposite to the first edge portion Ws1; and a first push-up unit 57 and a second push-up unit 58 which are respectively arranged in the same rigid body as the first clamp unit 55 and the second clamp unit 56, and extend pushers 574 and 584 downward, and in a state in which the rectangular workpiece Ws is placed on a workpiece support 721G of a pallet 7 having the workpiece support 721G, and the pallet 7 is positioned below the separation unit 5, the method includes: a holding step of holding the first edge portion Ws1 and the second edge portion Ws2 of the workpiece Ws placed on the workpiece support 721G by the first clamp unit 55 and the second clamp unit 56, respectively; a second edge portion lifting step of lifting the second clamp unit 56 and the second edge portion Ws2 of the workpiece Ws by a reaction force from the pallet 7 which is received by extending the pusher 584 of the second push-up unit 58 downward and pushing the pusher 584 onto the pallet 7; a first edge portion lifting step of lifting the first clamp unit 55 and the first edge portion Ws1 of the workpiece Ws by a reaction force from the pallet 7 which is received by extending the pusher 574 of the first push-up unit 57 downward and pushing the pusher 574 onto the pallet 7 after performing the second edge portion lifting step; and a raising step of raising the separation unit 5, separating the workpiece Ws from the workpiece support 721G and raising the workpiece Ws, after performing the first edge portion lifting step. This enables the workpiece separation method to lift the workpiece Ws welded to the workpiece support 721G from the second edge portion Ws2 side and raise the workpiece Ws, thereby making it possible to separate the workpiece Ws from the workpiece support 721G more reliably.

Further, an aspect of a pallet shelf device 92 includes: a plurality of storage units P1 to Pn which are arranged in parallel in an up-down direction, and capable of storing a pallet 7 in each of the storage units P1 to Pn; a workpiece separation device 93 of the above aspect which is arranged below the plurality of storage units P1 to Pn; and an elevator shelf 22 which moves the pallet 7 between each of the storage units P1 to Pn and a lower part of the separation unit 5 in the workpiece separation device 93. This makes it possible to separate the plurality of pallet workpieces Ws from the workpiece supports 721G efficiently.

The present embodiment is not limited to the configuration described above, and various modifications can be made to the extent not departing from the gist of the present invention.

The workpiece separation device 93 may be a workpiece separation device 93V provided with a separation unit 5V having a vibration device V instead of the separation unit 5. The vibration device V will be described with reference to FIGS. 21 to 23. FIG. 21 is a top view illustrating the separation unit 5V to which the vibration device V is attached. FIG. 22 is a side view illustrating an operation of the vibration device V. FIG. 23 is a block diagram illustrating a configuration of a pallet shelf device 92V having the separation unit 5V.

As illustrated in FIGS. 21 to 23, the separation unit 5V is provided with the vibration device V in comparison with the separation unit 5. The vibration device V is bridged and fixed between the left frame 511 and the right frame 512 of the basic frame body 51. The vibration device V includes a holding bar V1, a vibration unit V2, and a support unit V3. A pair of the support units V3 are provided in the vibration device V, and fixed to the left frame 511 and the right frame 512, respectively. Each of the support units V3 has a bar raising/lowering cylinder V32, and a rod V32a entering and leaving below each of the bar raising/lowering cylinder V32. The pair of rods V32a have the lower ends fixed to both ends of the holding bar V1. The operation of the bar raising/lowering cylinders V32 is controlled by the shelf control unit 23 (see FIG. 23).

The vibration unit V2 is a vibrating member that vibrates by energization under the control of the shelf control unit 23, and in this example, three vibration units V2 are attached apart from each other along the holding bar V1. As illustrated in FIG. 22, regarding the height position, the holding bar V1 raises and lowers between the position PS10 and the position PS11 below the position PS10 by means of the operation of the bar raising/lowering cylinder V32. The position PS10 is a retracted position, and at the position PS11, the holding bar V1 comes into contact with the skeleton Ws which is placed on the workpiece support 721G of the pallet 7, or comes into contact with the skeleton Ws in a state which is held by the separation unit 5V. That is, the holding bar V1 is capable of coming into contact with a workpiece such as the skeleton Ws. The shelf control unit 23 positions the holding bar V1 at the position PS11, and vibrates the vibration units V2. Thus, when the skeleton Ws overlaps with the product Wp and cannot be lifted, a vibration is applied to change the relative position to release the overlap, thereby increasing the possibility that the skeleton Ws can be separated from the product Wp and lifted.

When the pallet shelf device 92V has the separation unit 5V, the vibration application processing (Step 15) may be performed by setting N of the processing in Step 9 of FIG. 24 to 2 or more.

The raising/lowering chain 4 for suspending the separation unit 5 downward is not limited to a chain as long as it is a string-like member. Therefore, the raising/lowering chain support unit 32 for lowering the tip end of the string-like member by changing the direction of the string-like member is not limited to the one using a sprocket. The string-like member may be a belt-like member, a string-like member, or a wire-like member in addition to a chain.

## Claims

1. A workpiece separation device (93) comprising:
a raising/lowering unit (3) from which a plurality of string-like members (4) are hung down in such a way as to be raised and lowered synchronously;
a separation unit (5) which is suspended by the plurality of string-like members (4);
a pallet (7) which has a workpiece support (721G) on which a rectangular workpiece (Ws) is placed and is arranged below the separation unit (5);
a first clamp unit (55) which is provided in the separation unit (5), and holds a first edge portion (Ws1) of the workpiece (Ws) placed on the workpiece support (721G) ;
a second clamp unit (56) which holds a second edge portion (Ws2) of the workpiece (Ws) opposite to the first edge portion (Ws1); and
a push-up unit (58) which receives a reaction force from the pallet (7) by pushing a pusher (584) onto the pallet (7), thereby pushing up the second clamp unit (56).

2. The workpiece separation device (93) according to claim 1, further comprising:
a conduction sensor (65) which detects whether there is conduction between either the first clamp unit (55) or the second clamp unit (56) and the workpiece support (721G).

3. The workpiece separation device (93) according to claim 1 or 2, further comprising:
a holding bar (V1) which is capable of coming into contact with the workpiece (Ws) held by the first clamp unit (55) and the second clamp unit (56); and
a vibration unit (V2) which vibrates the holding bar (V1).

4. A workpiece separation method in which a separation unit (5) is used, the separation unit (5) includes: a first clamp unit (55) which is suspended from a raising/lowering unit (3) to be raised and lowered, and holds a first edge portion (Ws1) of a rectangular workpiece (Ws); a second clamp unit (56) which holds a second edge portion (Ws2) of the workpiece (Ws) opposite to the first edge portion (Ws1); and a first push-up unit (57) and a second push-up unit (58) which are respectively arranged in a same rigid body as the first clamp unit (55) and the second clamp unit (56), and extend respective pushers (574, 584) downward, and
in a state in which the rectangular workpiece (Ws) is placed on a workpiece support (721G) of a pallet (7) having the workpiece support (721G), and the pallet (7) is positioned below the separation unit (5), the method comprising:
a step of holding a first edge portion (Ws1) and a second edge portion (Ws2) of the workpiece (Ws) placed on the workpiece support (721G) by the first clamp unit (55) and the second clamp unit (56), respectively;
a step of lifting the second clamp unit (56) and the second edge portion (Ws2) of the workpiece (Ws) by a reaction force from the pallet (7) which is received by extending the pusher (584) of the second push-up unit (58) downward and pushing the pusher (584) onto the pallet (7);
a step of lifting the first clamp unit (55) and the first edge portion (Ws1) of the workpiece (Ws) by a reaction force from the pallet (7) which is received by extending the pusher (574) of the first push-up unit (57) downward and pushing the pusher (574) onto the pallet (7) after lifting the second edge portion (Ws2); and
a step of raising the separation unit (5), separating the workpiece (Ws) from the workpiece support (721G) and raising the workpiece (Ws), after lifting the first edge portion (Ws1).

5. A pallet shelf device (92) comprising:
a plurality of storage units (P1-Pn) which are arranged in parallel in an up-down direction, and capable of storing a pallet (7) in each of the storage units (P1-Pn);
a workpiece separation device (93) according to any one of claims 1 to 3 which is arranged below the plurality of storage units (P1-Pn); and
an elevator shelf (22) which moves the pallet (7) between each of the storage units (P1-Pn) and a lower part of the separation unit (5) in the workpiece separation device (93).

## Patentansprüche

1. Eine Werkstücktrennvorrichtung (93) umfassend:
eine Hebe-/Senkeinheit (3), an der mehrere seilartige Elemente (4) so aufgehängt sind, dass sie synchron angehoben und abgesenkt werden können;
eine Trenneinheit (5), die an der Vielzahl von seilartigen Elementen (4) aufgehängt ist;
eine Palette (7), die eine Werkstückauflage (721G) aufweist, auf die ein rechteckiges Werkstück (Ws) gelegt wird, und die unterhalb der Trenneinheit (5) angeordnet ist;
eine erste Klemmeinheit (55), die in der Trenneinheit (5) angeordnet ist und einen ersten Kantenabschnitt (Ws1) des auf die Werkstückauflage (721G) gelegten Werkstücks (Ws) hält;
eine zweite Klemmeinheit (56), die einen zweiten Kantenabschnitt (Ws2) des Werkstücks (Ws) gegenüber dem ersten Kantenabschnitt (Ws1) hält; und
eine Hochschiebeeinheit (58), die eine Reaktionskraft von der Palette (7) aufnimmt, indem sie einen Schieber (584) auf die Palette (7) schiebt, wodurch sie die zweite Klemmeinheit (56) hochschiebt.

2. Die Werkstücktrennvorrichtung (93) gemäß Anspruch 1, ferner umfassend:
einen Leitungssensor (65), der detektiert, ob eine Leitung zwischen der ersten Klemmeinheit (55) oder der zweiten Klemmeinheit (56) und der Werkstückauflage (721G) besteht.

3. Die Werkstücktrennvorrichtung (93) gemäß Anspruch 1 oder 2, des Weiteren umfassend:
eine Haltestange (V1), die mit dem von der ersten Klemmeinheit (55) und der zweiten Klemmeinheit (56) gehaltenen Werkstück (Ws) in Kontakt kommen kann; und
eine Vibrationseinheit (V2), die die Haltestange (V1) in Schwingungen versetzt.

4. Ein Werkstücktrennverfahren, bei dem eine Trenneinheit (5) verwendet wird, wobei die Trenneinheit (5) umfasst:
eine erste Klemmeinheit (55), die an einer zu hebenden und zu senkenden Hebe-/Senkeinheit (3) aufgehängt ist und einen ersten Kantenabschnitt (Ws1) eines rechteckigen Werkstücks (Ws) hält;
eine zweite Klemmeinheit (56), die einen zweiten Kantenabschnitt (Ws2) des Werkstücks (Ws) gegenüber dem ersten Kantenabschnitt (Ws1) hält; und
eine erste Hochschiebeeinheit (57) und eine zweite Hochschiebeeinheit (58), die jeweils in demselben starren Körper wie die erste Klemmeinheit (55) und die zweite Klemmeinheit (56) angeordnet sind und entsprechende Schieber (574, 584) nach unten erstrecken, und
in einem Zustand, in dem das rechteckige Werkstück (Ws) auf einer Werkstückauflage (721G) einer Palette (7) mit der Werkstückauflage (721G) platziert ist, und die Palette (7) unterhalb der Trenneinheit (5) positioniert ist, wobei das Verfahren umfasst:
einen Schritt des Haltens eines ersten Kantenabschnitts (Ws1) und eines zweiten Kantenabschnitts (Ws2) des Werkstücks (Ws), das auf der Werkstückauflage (721G) angeordnet ist, durch die erste Klemmeinheit (55) bzw. die zweite Klemmeinheit (56);
einen Schritt des Anhebens der zweiten Klemmeinheit (56) und des zweiten Kantenabschnitts (Ws2) des Werkstücks (Ws) durch eine Reaktionskraft von der Palette (7), die durch Ausfahren des Schiebers (584) der zweiten Hochschiebeeinheit (58) nach unten und Schieben des Schiebers (584) auf die Palette (7) aufgenommen wird
einen Schritt des Anhebens der ersten Klemmeinheit (55) und des ersten Kantenabschnitts (Ws1) des Werkstücks (Ws) durch eine Reaktionskraft von der Palette (7), die durch Ausfahren des Schiebers (574) der ersten Hochschiebeeinheit (57) nach unten und Schieben des Schiebers (574) auf die Palette (7) nach Anheben des zweiten Kantenabschnitts (Ws2) aufgenommen wird; und
einen Schritt des Anhebens der Trenneinheit (5), des Trennens des Werkstücks (Ws) von der Werkstückauflage (721G) und des Anhebens des Werkstücks (Ws) nach dem Anheben des ersten Kantenabschnitts (Ws1).

5. Eine Palettenregalvorrichtung (92), umfassend:
eine Vielzahl von Lagereinheiten (P1-Pn), die parallel in einer Richtung von oben nach unten angeordnet sind, und die in der Lage sind, eine Palette (7) in jeder der Lagereinheiten (P1-Pn) zu lagern;
eine Werkstücktrennvorrichtung (93) gemäß einem der Ansprüche 1 bis 3, die unterhalb der mehreren Lagereinheiten (P1-Pn) angeordnet ist; und
ein Hubregal (22), das die Palette (7) zwischen jeder der Lagereinheiten (P1-Pn) und einem unteren Teil der Trenneinheit (5) in der Werkstücktrennvorrichtung (93) bewegt.

## Revendications

1. Dispositif de séparation des pièces (93) comprenant :
une unité de levage/abaissement (3) à laquelle plusieurs éléments en forme de corde (4) sont suspendus de manière à être levés et abaissés de façon synchronisée ;
une unité de séparation (5) qui est suspendue par la pluralité d'éléments en forme de corde (4) ;
une palette (7) comportant un support de pièce (721G) sur lequel est placée une pièce rectangulaire (Ws) et qui est disposée sous l'unité de séparation (5) ;
une première unité de serrage (55) qui est prévue dans l'unité de séparation (5) et qui maintient une première partie du bord (Ws1) de la pièce d'usinage (Ws) placée sur le support de pièce d'usinage (721G) ;
une seconde unité de serrage (56) qui maintient une seconde partie du bord (Ws2) de la pièce (Ws) opposée à la première partie du bord (Ws1) ; et
une unité de poussée (58) qui reçoit une force de réaction de la palette (7) en poussant un poussoir (584) sur la palette (7), poussant ainsi la seconde unité de serrage (56) vers le haut.

2. Dispositif de séparation des pièces (93) selon la revendication 1, comprenant en outre :
un capteur de conduction (65) qui détecte s'il y a conduction entre la première unité de fermeture (55) ou la seconde unité de fermeture (56) et le support de pièce (721G).

3. Dispositif de séparation des pièces (93) selon la revendication 1 ou 2, comprenant en outre :
une barre de maintien (VI) capable d'entrer en contact avec la pièce d'usinage (Ws) maintenue par la première unité de fermeture (55) et la seconde unité de fermeture (56) ; et
une unité de vibration (V2) qui fait vibrer la barre de maintien (VI).

4. Procédé de séparation de pièces dans lequel une unité de séparation (5) est utilisée, l'unité de séparation (5) comprend : une première unité de serrage (55) qui est suspendue à une unité de levage/abaissement (3) pour être levée et abaissée, et qui maintient une première partie de bord (Ws1) d'une pièce rectangulaire (Ws) ; une seconde unité de serrage (56) qui maintient une seconde partie de bord (Ws2) de la pièce (Ws) opposée à la première partie de bord (Ws1) ; et une première unité de poussée (57) et une seconde unité de poussée (58) qui sont respectivement disposées dans un même corps rigide que la première unité de serrage (55) et la seconde unité de serrage (56), et qui étendent des poussoirs respectifs (574, 584) vers le bas, et
dans un état où la pièce rectangulaire (Wb) est placée sur un support de pièce (721G) d'une palette (7) ayant le support de pièce (721G), et la palette (7) est positionnée en dessous de l'unité de séparation (5), le procédé comprenant :
une étape de maintien d'une première partie de bord (Ws1) et d'une seconde partie de bord (Ws2) de la pièce (Ws) placée sur le support de pièce (721G) par la première unité de serrage (55) et la seconde unité de serrage (56), respectivement ;
une étape consistant à soulever la seconde unité de fermeture (56) et la seconde partie du bord (Ws2) de la pièce (Ws) par une force de réaction provenant de la palette (7) qui est reçue en étendant le poussoir (584) de la seconde unité de poussée (58) vers le bas et en poussant le poussoir (584) sur la palette (7) ;
une étape consistant à soulever la première unité de serrage (55) et la première partie du bord (Ws1) de la pièce (Ws) par une force de réaction provenant de la palette (7) qui est reçue en déployant le poussoir (574) de la première unité de poussée (57) vers le bas et en poussant le poussoir (574) sur la palette (7) après avoir soulevé la seconde partie du bord (Ws2) ; et
une étape consistant à soulever l'unité de séparation (5), à séparer la pièce (Ws) du support de pièce (721G) et à soulever la pièce (Ws), après avoir soulevé la première partie du bord (Ws1).

5. Dispositif d'étagère à palettes (92) comprenant :
une pluralité d'unités de stockage (P1-Pn) disposées parallèlement dans le sens haut-bas et capables de stocker une palette (7) dans chacune des unités de stockage (Pl- Pn) ;
un dispositif de séparation des pièces (93) selon l'une quelconque revendications 1 à 3, disposé sous la pluralité d'unités de stockage (P1-Pn) ; et
un plateau élévateur (22) qui déplace la palette (7) entre chacune des unités de stockage (P1-Pn) et une partie inférieure de l'unité de séparation (5) dans le dispositif de séparation des pièces (93).
